Europäisches Patentamt

European Patent Office

Office européen des brevets

(19)

(11) **EP 0 845 140 B1**

(12) **EUROPEAN PATENT SPECIFICATION**

(45) Date of publication and mention
of the grant of the patent:
**05.09.2001 Bulletin 2001/36**

(21) Application number: **96928632.7**

(22) Date of filing: **23.07.1996**

(51) Int Cl.⁷: **G11B 5/55**

(86) International application number:
**PCT/IB96/00925**

(87) International publication number:
**WO 97/05604 (13.02.1997 Gazette 1997/08)**

(54) **IMPROVED CHATTER REDUCTION IN SLIDING MODE CONTROL OF A DISK DRIVE ACTUATOR**

ERSCHÜTTERUNGSVERMINDERUNG IN GLEITENDEM MODEREGELUNGSVERFAHREN
EINES PLATTENANTRIEBSSTELLGLIEDES

REDUCTION AMELIOREE DE LA VIBRATION DANS LA COMMANDE DU MOUVEMENT LINEAIRE
D'UN BRAS DE LECTURE

(84) Designated Contracting States:
**DE ES FR GB IE IT NL**

(30) Priority: **26.07.1995 US 507621**

(43) Date of publication of application:
**03.06.1998 Bulletin 1998/23**

(73) Proprietor: **CIRRUS LOGIC, INC.**
**Fremont, CA 94538-6423 (US)**

(72) Inventor: **SUPINO, Louis**
**Boulder, CO 80304 (US)**

(74) Representative:
**Beresford, Keith Denis Lewis et al**
**BERESFORD & Co.**
**High Holborn**
**2-5 Warwick Court**
**London WC1R 5DJ (GB)**

(56) References cited:
**EP-A- 0 314 111          EP-A- 0 456 371**
**EP-A- 0 543 654          DE-A- 4 019 657**

- **PATENT ABSTRACTS OF JAPAN vol. 10, no. 215
  (P-481), 26 July 1986 & JP,A,61 054080
  (HITACHI), 18 March 1986,**
- **PATENT ABSTRACTS OF JAPAN vol. 14, no. 482
  (P-1119), 19 October 1990 & JP,A,02 193369
  (TOKICO), 31 July 1990,**
- **PATENT ABSTRACTS OF JAPAN vol. 15, no. 471
  (P-1282), 28 November 1991 & JP,A,03 201272
  (SONY), 3 September 1991,**
- **IBM Technical Disclosure Bulletin, vol. 33, no. 4,
  Sept. 1990: "Sliding mode control for arrivals
  and small amounts",**
- **"Adaptive sliding mode control of a disk drive
  actuator", Weerasooriya et al, Asia-Pacific
  Workshop on Advances in Motion Control
  Proceedings; Singapore, 15-16 July 1993, IEEE,
  USA pages 177-182**

EP 0 845 140 B1

Printed by Jouve, 75001 PARIS (FR)

## EP 0 845 140 B1

**Description**

The present invention relates to computer technology and, more specifically, to controlling the read/write head actuator in a disk drive.

BACKGROUND OF THE INVENTION

In magnetic disk storage systems, a transducing head writes digital data onto the surface of a magnetic storage medium. The digital data serves to modulate the current in a read/write head coil so that a sequence of corresponding magnetic flux transitions are written onto the magnetic medium in a series of concentric data tracks. To read this recorded data, the magnetic medium again passes under the read/write head which transduces the magnetic transitions into pulses in an analog signal. These pulses are then decoded by read channel circuitry to reproduce the digital data.

The read/write head is normally mounted on an actuator arm which is positioned by means of a voice coil motor (VCM). A servo system controls the VCM, and thereby the head position, necessary for reading and writing information in response to requests from a computer to which the disk drive is connected. The servo system performs two functions: (1) a "seek" or "access" function in which the servo system moves the head to a selected track; and (2) when the head reaches the selected track, the servo system commences a "track following" or "tracking" function in which it accurately positions the head over a centerline of the track and maintains that position as successive portions of the track pass by the head. Servo control information embedded within the data provides inter-track head position information so that a head position error, indicative of a difference between the estimated head position and the desired head position, can be computed. In response to the head position error, the servo control system generates a VCM control signal to align the head over the centerline of the selected track, thereby driving the head position error to zero.

Conventional servo systems are typically linear controllers employing Proportional-Integral-Derivative (PID) feedback or state estimators. The problem with these types of linear controllers, however, is they are sensitive to parametric variations in the VCM control system and to external load disturbances. Conventional adaptive linear controllers overcome these sensitivity problems by continuously re-programming the controller to compensate for the parameter variations and load disturbances. Although adequate, adaptive control systems can be overly complex and expensive to implement. Further, adaptive linear controllers require notch filters to compensate for mechanical resonances. What is needed is a low cost, less complex solution to the sensitivity and resonance problems inherent in the control of a disk drive actuator.

"Bang-bang" control law is yet another conventional method suggested by the prior art for controlling the actuator position in a disk drive (e.g., see C. Denis Mee and Eric D. Daniel, "Magnetic Recording Volume II: Computer Data Storage", McGraw-Hill, Inc., 1988, pp. 64-65). In this type of control system, the motor command signal switches between maximum positive acceleration and maximum negative deceleration in response to a velocity error input signal. The goal is to force the actuator velocity to follow a predetermined trajectory as the actuator moves toward a target track. "Bang-bang" control systems, however, are not used in the prior art because of an inherent "chatter" problem caused by rapidly switching between the maximum positive and negative values. Chattering causes large amounts of undesirable system noise. Additionally, the control near the target alternates between the most positive and negative values yielding poor tracking results. There is, therefore, a need for a disk drive actuator control system that can minimize switching noise and provide adequate tracking performance.

It is known from IBM Technical Disclosure Bulletin, Vol. 33, No. 4, September 1990, to provide a sliding mode controller to improve the settle characteristics of a Direct Access Storage Device in which feedback gain is switched according to a switching line defined in a velocity/position phase plane.

According to the present invention there is disclosed apparatus for use in at least one of reading and writing data recorded on a data storage medium by means of a read/write head whose position relative to the medium is adjustable by an actuator operated by a motor,

the apparatus comprising;
a sliding mode controller operable to output a motor control signal for use in controlling said motor, the controller comprising;
input means for inputting an actuator position error signal indicative of a difference between an estimated actuator position and a desired actuator position;
generating means for generating from the actuator position error signal phase state signals defining a trajectory in a state space;
calculating means for calculating a parameter σ from the phase state signals in accordance with a predetermined relationship defining a sliding line in the state space;
control means using the value of the parameter σ to control a switching gain block such that the gain is switched between first and second gains when the trajectory crosses the sliding line to thereby apply the gain of the gain block to the phase state signals to obtain a control signal output; and
generating means for generating the a motor control signal from the control signal output;

characterized by further comprising;
an integrating means for integrating the parameter σ to obtain a smoothed parameter value for use in controlling the switching gain block and a multiplier for multiplying the control signal by the magnitude of the smoothed parameter value to thereby attenuate high frequency components in the motor control signal.

In embodiments of the present invention, a spin motor rotates a magnetic disk under a read/write head. Recorded on the magnetic disk are several concentric data tracks having servo information embedded thereon. Read channel circuitry, connected to the read/write head, decodes the digitally recorded data and transmits the servo data to a state estimator. The state estimator processes the servo data to generate an actuator position signal that is subtracted from a reference actuator position to generate an actuator position error signal. A sliding mode controller, responsive to the actuator position error signal, switches between positive and negative feedback gains (rather than maximum positive and negative values as in "bang-bang" control) in order to generate a motor control signal. The motor control signal is amplified and applied to a VCM connected to one end of an actuator having the read/write head attached to the other end. The VCM controls the motion of the actuator in order to position the read/write head over a selected track.

The sliding mode controller is defined by two phase states: an actuator position error phase state and a actuator position error velocity phase state. The actuator position error phase state is the difference between an estimated actuator position and a desired actuator position (e.g., the difference between a current track the read/write head is positioned over and a selected new track). The actuator position error velocity phase state is the rate of change of the actuator position error and can be generated by differentiating the actuator position error or by a state estimator. The position error velocity is also the negative velocity of the actuator.

By switching between positive and negative feedback gains, the sliding mode controller operates to drive the phase states toward a predetermined phase plane trajectory. The sliding mode controller is, therefore, a function of the phase states rather than the physical characteristics of the disk drive, and the control system is substantially insensitive to parametric variations and external load disturbances. Further, the notch filters in conventional linear controllers used to compensate for mechanical resonances are not necessary in the sliding mode controller of the present invention. It is relatively simple and inexpensive to implement, and there is a well defined method for proving global stability.

In the preferred embodiment, the phase plane trajectory is defined by four segments: a substantially parabolic acceleration segment that defines an acceleration of the actuator toward the selected track; a linear constant velocity segment that defines a constant velocity of the actuator toward the selected track; a substantially parabolic deceleration segment that defines a deceleration of the actuator toward the selected track; and a linear tracking segment that defines a tracking mode of the actuator.

The sliding mode controller comprises switching logic, responsive to the phase states, for switching between the positive and negative feedback modes wherein the switching logic operates according to the current trajectory segment being followed by the phase states. The sliding mode controller further comprises a a processing block, also responsive to the phase states, for controlling the operating mode of the switching logic by determining which trajectory segment σ the phase states are to follow.

In order to reduce noise caused by switching between the negative and positive feedback gains, the sliding mode controller generates the motor control signal using only the actuator position error velocity phase state during seek operations. This reduces the magnitude of the control signal, and thereby the amount of switching in the system, but also requires an initial error velocity reference signal to start the actuator moving in the correct direction. Once the actuator substantially reaches the selected track, the sliding mode controller switches to a tracking mode and generates the motor control signal using both the actuator position error and actuator position error velocity phase states. The actuator position error is also integrated and added to the motor control signal in order to drive the steady state error to zero.

In an embodiment, the sliding mode controller is responsive to an actuator position error, velocity error, and acceleration phase states. The velocity error is generated by subtracting an estimated velocity from a reference velocity, where the reference velocity is computed as a function of the actuator position error.

Preferably, the control signal is generated proportional to an integral of sgn(σ), In effect, the control signal is smoothed to attenuate the high frequency components that can generate electromagnetic and/or acoustic emissions.

BRIEF DESCRIPTION OF THE DRAWINGS

Figure 1 is a block diagram of the disk drive control system of the present invention.

Figure 2A and 2B show an example data format of a magnetic disk comprising a plurality of concentric data tracks with embedded servo fields.

Figure 3A shows an example second order system controlled by an example sliding mode controller.

Figure 3B are the phase plane plots for the position error and error velocity phase states for the positive and negative feedback modes of the control system shown in Figure 3A.

Figure 3C illustrates the operation of the sliding mode controller in driving the phase states toward a predetermine linear phase trajectory during a forward seek to a new track.

Figure 3D illustrates the affect of changing the slope of the linear phase trajectory in Figure 3C in order to extend the sliding mode.

Figure 3E illustrates a phase plane trajectory which covers the whole region of excursion thereby eliminating any linear mode of operation that may be sensitive to parameter variations.

Figure 4 illustrates the preferred phase plane trajectory of the present invention.

Figure 5 illustrates the VCM controller as a second order system having a position error and position error velocity phase state.

Figure 6 is a detailed diagram of the disk drive control system wherein the sliding mode controller is responsive to a position error and a position error velocity phase state.

Figures 7A, 7B, and 7C are flow charts that describe the operation of the sliding mode controller with reference to Figure 6.

Figure 8 is a detailed block diagram of a sliding mode controller is responsive to an actuator position error, velocity error, and acceleration phase states.

Figure 9 illustrates the converging boundary layer around the sliding mode phase state trajectory.

Figure 10 shows an integrator for integrating sgn ($\sigma$) in order to smooth the motor control signal.

Figure 11 is the preferred lookup table embodiment of the $\sigma$ processing block.

DETAILED DESCRIPTION OF THE DRAWINGS

**System Overview**

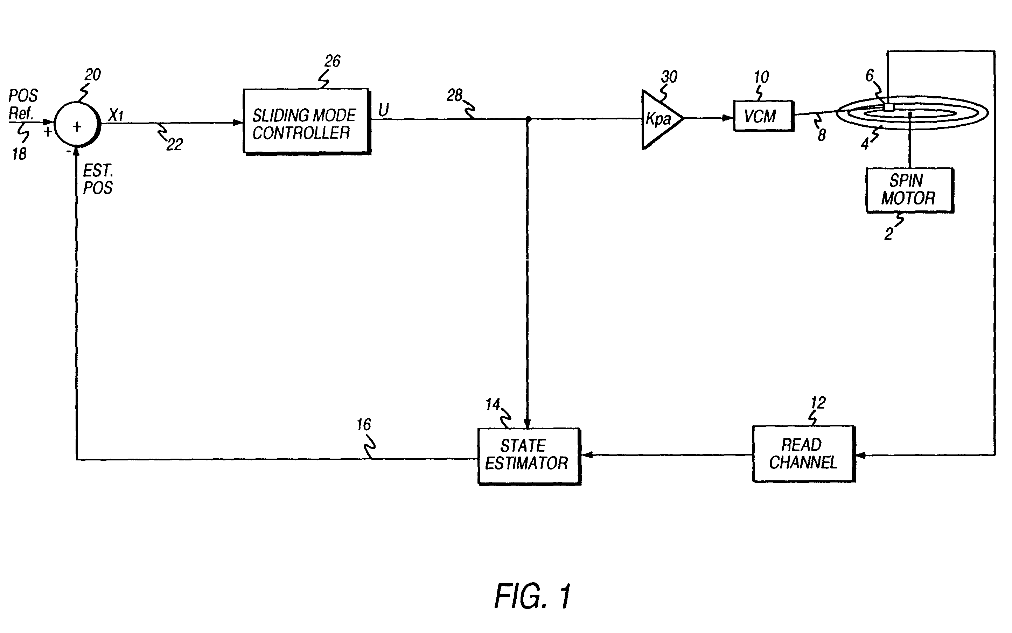

Figure 1 is an overview of the disk drive control system of the present invention. A spin motor **2** spins a magnetic disk **4** with computer data recorded thereon under a read/write head **6.** An actuator **8** positions the read/write head **6** over a selected track, and a Voice Coil Motor (VCM) **10** controls the motion of the actuator **8**. Read channel circuitry **12**, connected to receive the analog signal from the read/write head **6**, decodes the digital data recorded on the magnetic disk and transmits servo information to a state estimator **14.** The state estimator **14** models the VCM control system in order to generate an estimated actuator position **16** that is subtracted from a reference actuator position **18** at adder **20** to produce an actuator position error $X_1$ **22.** The reference actuator position **18** is the position of a selected track at which data is to be written or read. A sliding mode controller **26**, responsive to the actuator position error $X_1$ **22,** computes an acceleration motor control signal U **28,** amplified by amplifier **30,** and applied to the VCM **10** to position the read/write head over the selected track. The state estimator **14** also processes the motor control signal U **28** to generate the estimated actuator position **16.**

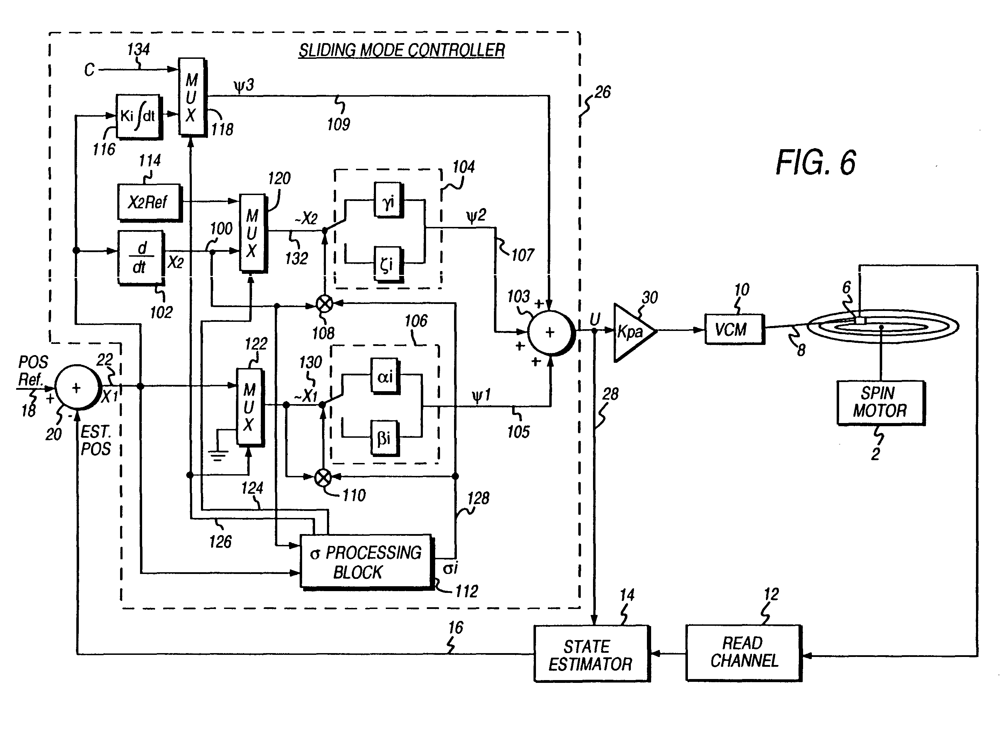

The state estimator **14** filters out errors in the servo position information caused by noise in the recording channel. In the embodiment of the sliding mode controller shown in Figure 6, the state estimator **14** can also replace the differentiator **102** in order to generate the actuator position error velocity phase state X2. State estimators are well known in the prior art such as described in U.S. Patent No. 4,679,103, the disclosure of which is hereby expressly incorporated by reference. There are also other well known techniques other than state estimators for generating the actuator phase states for use by the present invention.

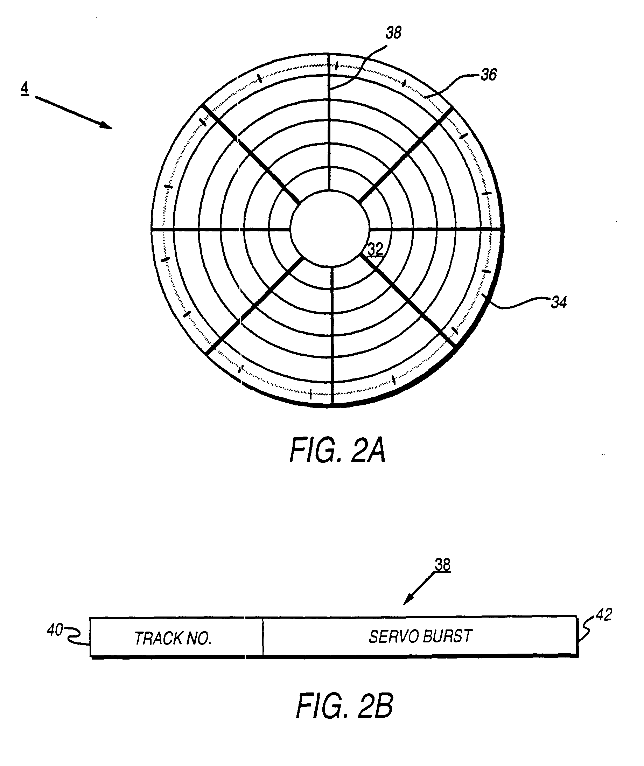

Referring now to Figures 2A and 2B, shown is an exemplary data format of the magnetic disk **4** comprising a plurality of concentric data tracks with an inner data track **32** and an outer data track **34.** As shown in Figure 2A , each data track comprises a plurality of sectors **36** and a plurality of servo fields **38** embedded therein. The servo fields **38** comprise track number information **40** processed by the state estimator **14** to generate the estimated actuator position **16** while seeking the selected track. Once the read/write head slows to within a predetermined velocity as it approaches the selected track, the state estimator **14** processes the track number **40** and the servo burst information **42** in the servo fields to align the head over the centerline of the selected track while writing and reading data. Servo bursts comprise a plurality of pulses recorded at precise locations adjacent to the track centerline. The magnitude of these servo burst pulses sensed by the read/write head indicates the off track position of the head.

**Theory of Operation**

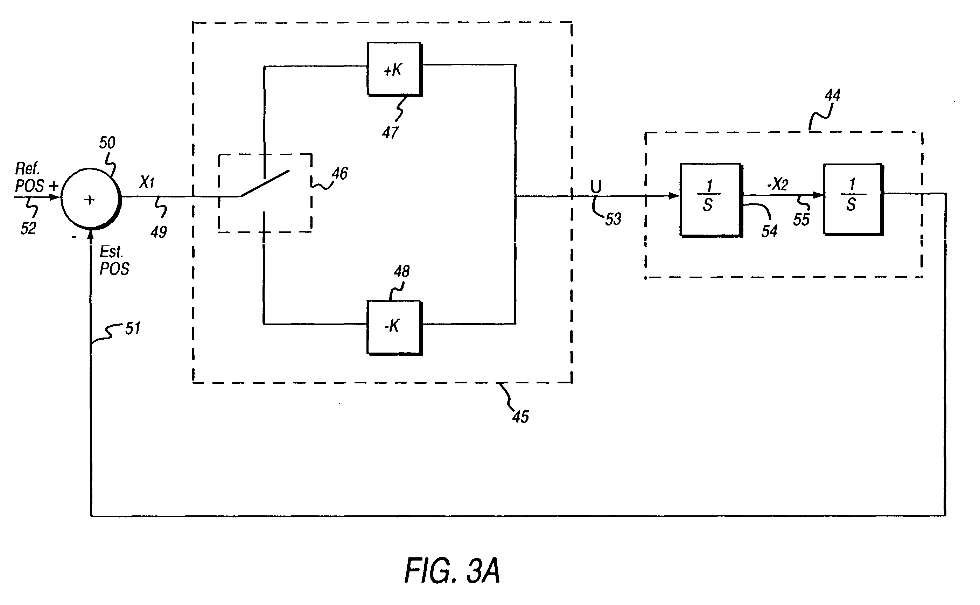

Operation of the sliding mode controller 26 is understood with reference to Figure 3A. Shown is an example second order system **44** controlled by an example sliding mode controller **45** that switches **46** between a positive gain **47** and negative gain **48** not necessarily equal in magnitude. A position error $X_1$ **49** is generated at the output of adder **50** by subtracting an estimated position **51** of the controlled system from a desired position reference command **52**. The position error $X_1$ **49** is multiplied by the positive gain **47** or the negative gain **48** depending on the state of switch **46** to generate an acceleration command U **53** as the input to the controlled system **44**. The output of integrator **54** is the velocity of the controlled system **44** which is also the negative of the position error velocity $-X_2$ **55.** When switch **46** selects the positive gain **47,** it is a negative feedback system, and when switch **46** selects the negative gain **48**, it is a positive feedback system. In their individual structures the system is unstable. However, the system can be made stable by repeatedly switching between the two structures.

The state space equation in negative feedback is:

$$\frac{dX1}{dt} = X2$$

$$\frac{dX2}{dt} = -KX1 \tag{1}$$

The general solution to equation (1) is:

$$X_1 = A\sin( Kt + \varphi) \tag{2}$$

$$X_2 = \sqrt{K}\, A\cos ( Kt + \varphi) \tag{3}$$

Combining equations (2) and (3),

$$\frac{X_1^{\,2}}{A^2} + \frac{X_2^{\,2}}{KA^2} = 1 \tag{4}$$

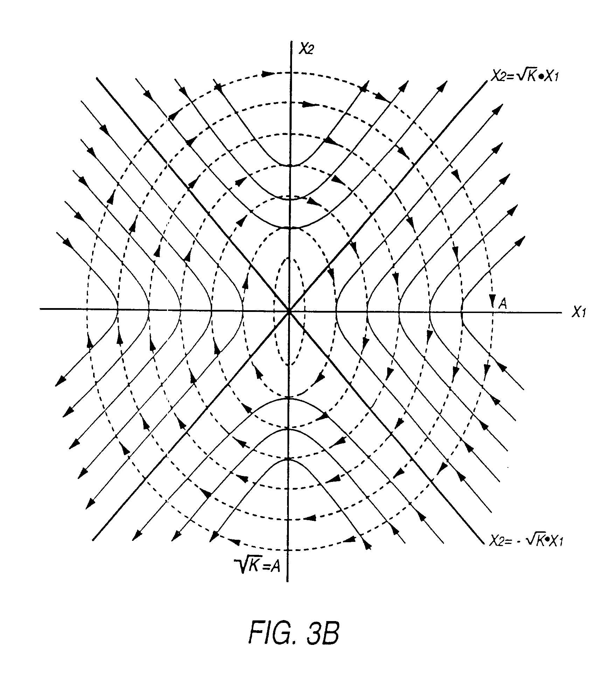

The phase plane plot of equation (4) is a set of ellipses with eccentricities A and $\sqrt{K}A$ as illustrated in Figure 3B.

The state space equation in positive feedback is:

$$\frac{dX1}{dt} = X2$$

$$\frac{dX2}{dt} = +KX1 \tag{5}$$

The solution to equation (5) is:

$$X_1 = B_{1e}^{\sqrt{K}t} + B_{2e}^{-\sqrt{K}t} \tag{6}$$

$$X_2 = \sqrt{K}B_{1e}^{\sqrt{K}t} - K\, B_{2e}^{-\sqrt{K}t}$$

Combining equations (5) and (6),

$$\frac{X_1{}^2}{4_{B_1 B_2}} - \frac{X_2{}^2}{4_{KB_1 B_2}} = 1 \tag{7}$$

The phase plane plot of equation (7) is a set of hyperbolas with two asymptotes as shown in Figure 3B.

The two individual phase state trajectories of equations (4) and (7) result in an unstable system since the phase states never reach the origin. It is possible, however, to reach the origin by driving the phase states along a third phase trajectory defined at the intersection of the negative and positive feedback trajectories. This is achieved by switching between the positive and negative gains in response to the current phase state values so that the phase states follow the predetermined third phase state trajectory.

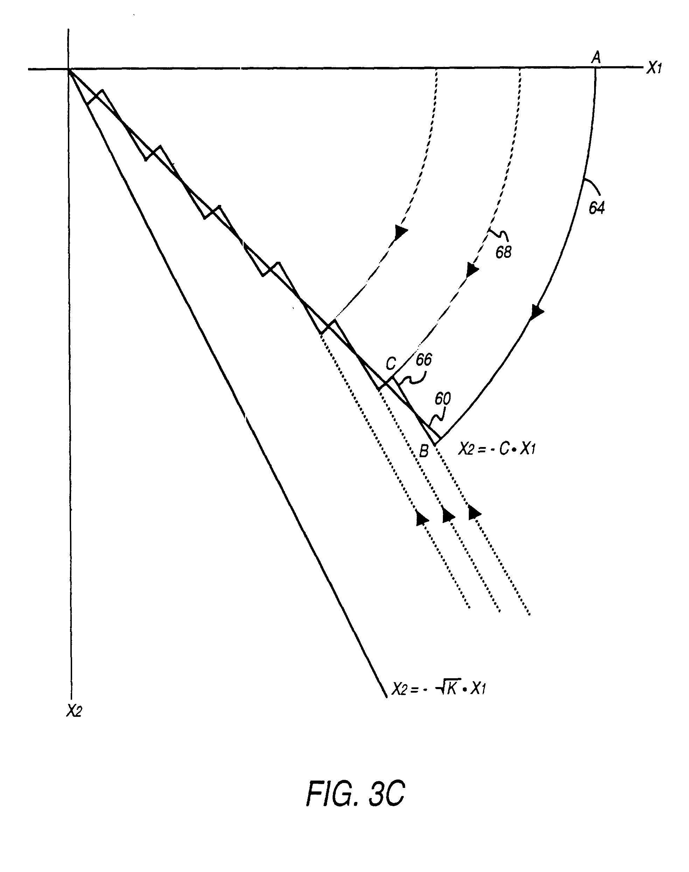

The switching operation is understood with reference to Figure 3C where the predetermined third phase state trajectory is shown as a linear segment **60**. When a new track is selected, the initial actuator position error is at point A, and the control system is initially switched to select the positive gain (i.e., negative feedback). As the actuator begins to accelerate toward the selected track, the phase states follow the arc trajectory **64** of the negative feedback mode. When the phase states reach the beginning of the third phase state trajectory **60** at the intersection point B, the sliding mode controller switches to the negative gain and the phase states begin to follow the hyperbola trajectory **66** of the positive feedback mode. When the phase states cross the third phase state trajectory **60** at point C, the controller switches back to the positive gain to drive the phase states along arc **68** back toward the third phase state trajectory **60**. This switching action is repeated so that the phase states slide along the linear segment **60** toward the origin of the phase plane. When the phase states are within a predetermined minimum distance from the origin of the phase plane, the system switches to a tracking mode where the sliding mode controller **26** repeatedly switches between positive and negative feedback in order to keep the phase states near the origin of the phase plane, thereby keeping the read/write head 6 aligned over the centerline of the selected track.

The time domain response of the control system when the phase states follow the sliding line of Figure 3C is:

$$X_1(t) = X_1(t_1)e^{-c(t-t1)} \tag{8}$$

where $t_1$ is the time when the phase states reach the sliding line at point B. Equation (8) is the average response of the system along the sliding line and it is substantially unaffected by variations in the parameter K or by external load disturbances. Consequently, it is not necessary to know the exact parameters of the system in order to determine the value for K. Equation (8), together with the existence Equation (11) below, prove that the system is globally stable within the sliding mode region.

The sliding mode controller determines when to switch between the positive and negative gains by observing the phase state values. The linear phase trajectory of Figure 3C is defined by:

$$X_2 = -C \bullet X_1 \tag{9}$$

where the constant C is the slope of the linear segment **60** (sliding line). By observing the phase states, the sliding mode controller switches the gains so that:

$$\sigma = X_2 + C \bullet X_1 = 0. \tag{10}$$

The sliding mode controller switches to the positive gain when $\sigma \cdot X_1 > 0$ and to the negative gain when $\sigma \cdot X_1 < 0$ in order to drive the phase states toward the linear phase state trajectory.

The overall response of the system is made faster by increasing the slope of the sliding line (i.e., increasing C). However, an important limitation in sliding mode control is that the third phase state trajectory must be constrained to a region in the phase plane where the positive and negative feedback phase state trajectories intersect in opposite directions. From Figure 3C it follows that the slope of the sliding line must be constrained to $0 < C < \sqrt{K}$. A further relationship derived from this constraint is:

```
lim σ•dσ < 0                                                    (11)
σ->0  dt        .
```

Equation (11) is known as the existence equation and is used to determine values for the positive and negative gains.

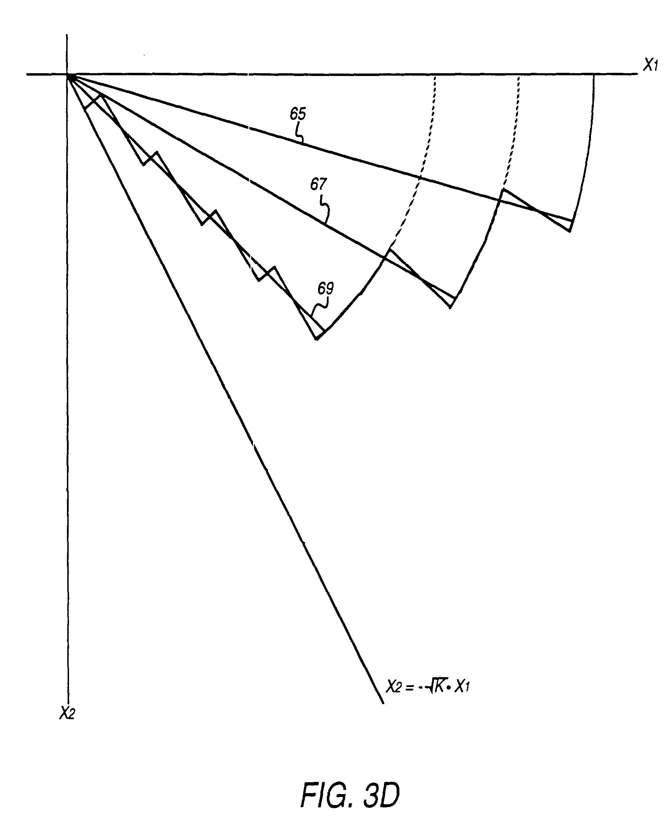

The linear sliding line trajectory **60** of Figure 3C has the disadvantage in that it initially operates in a linear feedback mode, and the initial arc trajectory **64** may drift due to parameter variation and external load disturbance. This problem is reduced by extending the sliding mode region of operation. For instance, a phase trajectory adjustor can continuously adjust the slope of the linear segment as shown in Figure 3D. After the phase states reach the first sliding line **65** and follow it for a predetermined amount of time, the phase trajectory adjustor increases the slope to sliding line **67** by increasing the constant C. The system operates in a linear mode (non-sliding mode) only during the inter-segment transitions. Eventually, the slope is increased to a predetermine maximum at sliding line **69** at which point the phase states slide along line **69** toward the origin of the phase plane.

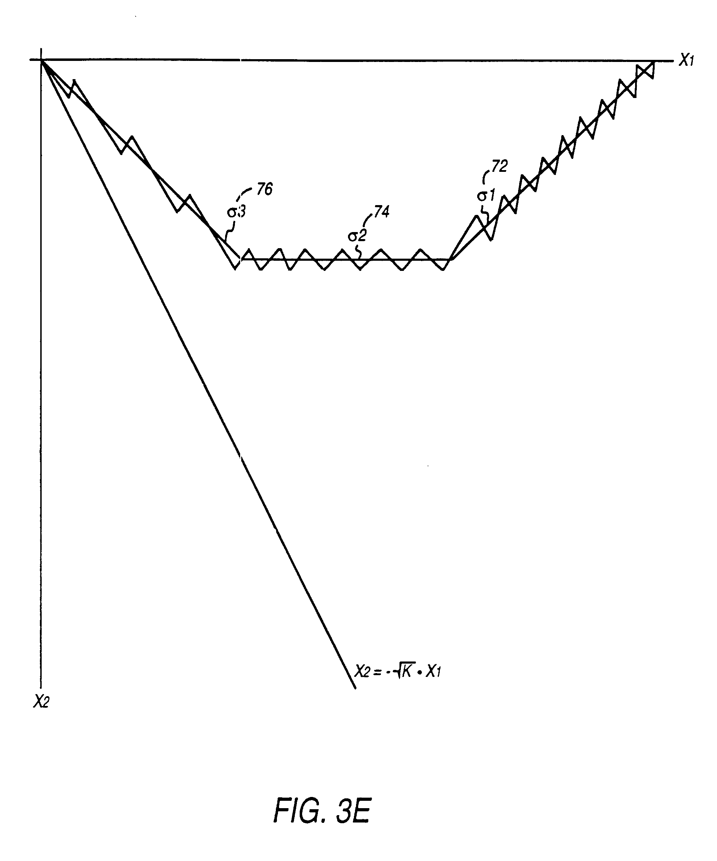

A more robust implementation is to define a phase trajectory to cover the entire region of excursion. This is illustrated in Figure 3E where the phase trajectory is comprised of three linear segments $\sigma_1$ **72**, $\sigma_2$ **74**, and $\sigma_3$ **76**:

$$\sigma_1 = X_2 - C_1 \cdot (X_1 - X_I) ;$$

$$\sigma_2 = X_2 - X_{2I}; \qquad\qquad (12)$$

and

$$\sigma_3 = X_2 + C_2 \cdot X_1;$$

where:

$X_1 =$ the actuator position error phase state;
$X_2 =$ the actuator position error velocity phase state;
$C_1 =$ the slope of the first segment;
$C_2 =$ the slope of the third segment;
$X_I =$ an initial actuator position error; and
$X_{2I} =$ a predetermined constant position error velocity.

The first linear segment $\sigma_1$ **72** represents an acceleration of the actuator **8,** the second linear segment $\sigma_2$ **74** represents a constant velocity of the actuator **8,** and the third segment $\sigma_3$ **76** represents a deceleration of the actuator **8** toward the selected track.

As described above, $C_2$ is constrained to $0<C_2<\sqrt{K}$, but all three segments are also constrained by the maximum acceleration, constant velocity, and deceleration limits of the VCM **10**. Once the phase trajectory is selected to be within the physical limitations of the VCM, the controller operates substantially independent of parameter variations and external load disturbances.

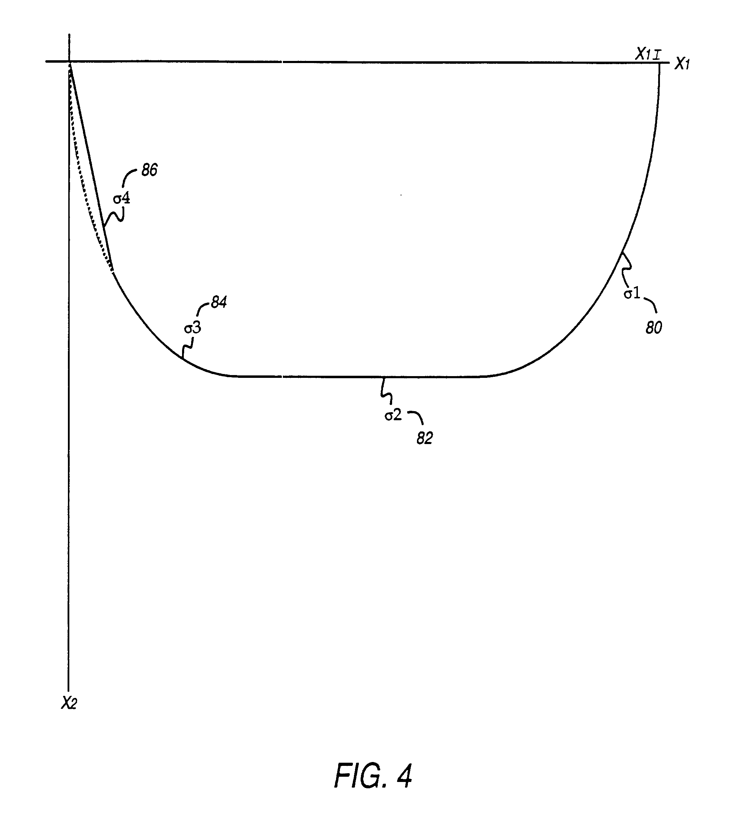

The optimum phase plane trajectory, and the preferred embodiment of the present invention, is illustrated in Figure **4.** This trajectory comprises a substantially parabolic acceleration segment $\sigma_1$ **80,** a linear constant velocity segment $\sigma_2$ **82,** a second substantially parabolic deceleration segment $\sigma_3$ **84,** and a linear deceleration segment $\sigma_4$ **86:**

$$\sigma_1 = C_1 \cdot X_2{}^2 + X_1 - X_{1I}; \qquad\qquad (13)$$

$$\sigma_2 = X_2 - X_{2I}; \qquad\qquad (14)$$

$$\sigma_3 = -C_2 \cdot X_2{}^2 + X_1; \qquad\qquad (15)$$

$$\sigma_4 = X_2 + C_3 \cdot X_1; \tag{16}$$

where:

$X_1 =$ the actuator position error phase state;

$X_2 =$ the actuator position error velocity phase state;

$C_1 =$ a predetermined acceleration constant;

$X_{1I} =$ an initial actuator position error;

$X_{2I} =$ a predetermined constant position error velocity;

$C_2 =$ a predetermined deceleration constant; and

$C_3 =$ a predetermined slope of the linear deceleration segment.

The linear deceleration segment $\sigma_4$ **86** is necessary because the slope of the parabolic deceleration segment $\sigma_3$ **84** becomes too steep near the origin to support sliding mode (i.e., the deceleration becomes too large). The linear constant velocity segment $\sigma_2$ **82** is not necessary if the inter-track seek distance is sufficiently short (i.e., the phase states will transition from $\sigma_1$ directly to $\sigma_3$ if the initial position error is less than a predetermined threshold).

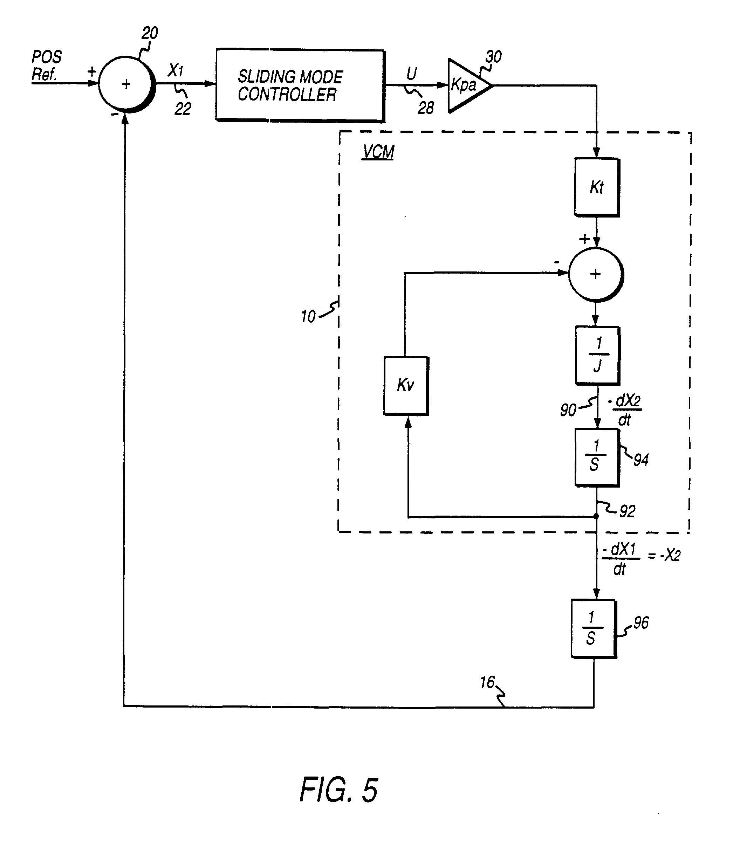

Figure 5 shows the disk actuator control system modeled as a second order plant. The output of the sliding mode controller U **28** is amplified **30** and input into the VCM **10**. The parameters of the VCM **10** are:

Kt = Torque Constant;

Kv = Coefficient of Viscous Damping; and

J = Inertia.

The input to the motor **90** is an acceleration command and the output **92** is a velocity. Therefore, the motor itself is modeled as an integrator **94**. The servo fields **38,** read channel circuitry **12,** and state estimator **14** are also modeled as an integrator **96** since integrating the output velocity **92** of the VCM **10** generates the actuator position **16**.

The position error phase state $X_1$ **22** is observed at the output of adder **20,** and the position error velocity phase state $X_2$ is observed as the negative of the VCM **10** velocity **92**. Alternatively, the position error velocity phase state $X_2$ can be generated by differentiating the position error signal $X_1$ **22** or generated by the state estimator **14**. From Figure 5, the phase state equations can be written as:

```
dX1  = X2; and
dt
                                                    (17)

dX2  = -Kv•X2 -  Kt•Kpa•U
dt       J           J
```

With $U = \pm K \cdot X_1$, the phase state equations are similar to equations (1) and (5), and the phase plots are similar to those shown in Figure 3B.

Although the position error $X_1$ alone is sufficient to implement sliding mode, further control is attained when the position error velocity $X_2$ is added to the feedback loop. In fact, the disk drive actuator control system of the present invention operates optimum with the position error velocity $X_2$ as the only control signal during a seek since the position error $X_1$ is initially much larger than the position error velocity $X_2$. Removing the position error $X_1$ from the feedback loop during seeks reduces the amount of switching noise. When the phase states reach a predetermined point on the phase trajectory, the system switches the position error $X_1$ phase state back into the control loop.

## Hardware Description

Figure 6 is a detailed diagram of the disk drive actuator sliding mode control system. The actuator position error $X_1$ **22** is input into the sliding mode controller **26,** and a differentiator **102** differentiates the actuator position error $X_1$ **22** to generate the actuator position error velocity signal $X_2$ **100.** In an alternative embodiment not shown, the state estimator **14** generates the position error velocity $X_2$. Two switching gain circuits **104** and **106** multiply the position error $\sim X_1$ **130** and error velocity $\sim X_2$ **132** control signals, respectively. Multipliers **108** and **110,** responsive to the phase states $\sim X_1$ and $X_2$ and the current trajectory segment $\sigma_i$, control the switching operation of the gain circuits. The sign

# EP 0 845 140 B1

of the resulting multiplication determines the state of the switch so as to drive the phase states $X_1$ and $X_2$ toward the predetermined sliding line trajectory shown in Figure 4. A σ processing block **112,** responsive to the phase states $X_1$ and $X_2$, implements the trajectory segment switching logic to determine which segment $\sigma_i$ of the phase state trajectory the phase states are to follow. The operation of the σ processing block **112,** the integrator **116,** the reference error velocity generator **114,** and multiplexers **118, 120,** and **122,** are discussed in detail bellow.

The gain values $\alpha_i$, $\beta_i$, $\gamma_i$ and $\zeta_i$ in switching gain blocks **104** and **106** are programmably set to appropriate values according to the current trajectory segment being followed by the phase states. Also, the gain values are programmed to predetermined values depending on whether the controller is executing a forward or reverse seek. Using the existence equation (11) and the phase state trajectory equations (13), (14), (15) and (16), the gain values for each segment of the phase state trajectory shown in Figure 4 can now be computed.

For σ = $\sigma_1$ (seek accelerate), differentiating equation (13) with respect to time and multiplying by equation (13) obtains:

$$\sigma_1 \cdot \frac{d\sigma_1}{dt} = \sigma_1 \cdot \left[ 2 \cdot C_1 \cdot X_2 \cdot \frac{dX_2}{dt} \right] + \sigma_1 \cdot X_2.$$

From equation (17) and factoring $\sigma_1 \cdot X_2$ obtains:

$$\sigma_1 \cdot \frac{d\sigma_1}{dt} = \sigma_1 \cdot \left[ 2 \cdot C_1 \cdot X_2 \cdot \left[ -\frac{Kv}{J} \cdot X_2 - \frac{Kt \cdot Kpa}{J} \cdot U + \frac{1}{2 \cdot C_1} \right] \right]. \qquad (18)$$

From Figures 5 and 6, and ignoring the $\psi_3$ term as insignificantly small during seeking:

$$U = \psi_1 \cdot X_1 + \psi_2 \cdot X_2 \qquad (19)$$

where:

$$\psi_1 = \begin{matrix} \alpha_i & \text{if } \sigma_i \cdot X_1 > 0 \\ \beta_i & \text{if } \sigma_i \cdot X_1 < 0 \end{matrix} \qquad (20)$$

$$\psi_2 = \begin{matrix} \gamma_i & \text{if } \sigma_i \cdot X_2 > 0 \\ \zeta_i & \text{if } \sigma_i \cdot X_2 < 0 \end{matrix} \qquad (21)$$

From equations (18) and (19), and ignoring term $\frac{1}{2 \cdot C_1}$ as insignificantly small:

$$\sigma_1 \cdot \frac{d\sigma_1}{dt} = 2 \cdot C_1 \cdot X_2 \cdot \sigma_1 \cdot \left[ -\frac{Kv}{J} \cdot X_2 - \frac{Kt \cdot Kpa}{J} \cdot (\psi_1 \cdot X_1 + \psi_2 \cdot X_2) \right]$$

$$\sigma_1 \cdot \frac{d\sigma_1}{dt} = 2 \cdot C_1 \cdot X_2 \cdot \left[ \left[ -\frac{Kv}{J} - \frac{Kt \cdot Kpa}{J} \cdot \psi_2 \right] \sigma_1 \cdot X_2 - \left[ \frac{Kt \cdot Kpa}{J} \cdot \psi_1 \right] \sigma_1 \cdot X_1 \right]. \quad (22)$$

In order to satisfy existence equation (11) (i.e., equation (22) is negative for any $X_1$ and $X_2$), the gain constants must

9

satisfy the following inequalities:

```
if reverse seeking (X2 > 0) then
{
        if (σ1•X1 > 0) from equation (20)
            ψ1 = α1 and for  Kt•Kpa•α1 > 0          => α1 > 0
                               J
        else if (σ1•X1 < 0) from equation (20)
            ψ1 = β1 and for  Kt•Kpa•β1 < 0          => β1 < 0
                               J
        if (σ1•X2 > 0) from equation (21)
            ψ2 = γ1 and for  [-Kv - Kt•Kpa•γ1] < 0 => γ1 > -Kv
                               J      J                     Kt•Kpa
        else if (σ1•X2 < 0) from equation (21)
            ψ2 = ζ1 and for  [-Kv - Kt•Kpa•ζ1] > 0 => ζ1 < -Kv
                               J      J                     Kt•Kpa
}



else if forward seeking (X2 < 0) then
{
        if (σ1•X1 > 0) from equation (20)
            ψ1 = α1 and for  Kt•Kpa•α1 < 0          => α1 < 0
                               J
        else if (σ1•X1 < 0) from equation (20)
            ψ1 = β1 and for  Kt•Kpa•β1 > 0          => β1 > 0
                               J
        if (σ1•X2 > 0) from equation (21)
            ψ2 = γ1 and for  [-Kv - Kt•Kpa•γ1] > 0 => γ1 < -Kv
                               J      J                     Kt•Kpa
        else if (σ1•X2 < 0) from equation (21)
            ψ2 = ζ1 and for  [-Kv - Kt•Kpa•ζ1] < 0 => ζ1 > -Kv
                               J      J                     Kt•Kpa
}
```

For $\sigma = \sigma_2$ (seek at constant velocity), differentiating equation (14) with respect to time and multiplying by equation (14) obtains:

$$\sigma_2 \bullet \frac{d\sigma_2}{dt} = \sigma_2 \bullet \frac{dX_2}{dt}$$

From equation (17):

$$\sigma_2 \bullet \frac{d\sigma_2}{dt} = \sigma_2 \bullet \left[ -\frac{Kv}{J} \bullet X_2 - \frac{Kt \bullet Kpa}{J} \bullet U \right] .$$

From equation (19):

$$\sigma 2 \cdot \frac{d\sigma 2}{dt} = \sigma 2 \cdot \left[ -\frac{Kv}{J} \cdot X2 - \frac{Kt \cdot Kpa}{J} \cdot (\psi 1 \cdot X1 + \psi 2 \cdot X2) \right]$$

$$\sigma 2 \cdot \frac{d\sigma 2}{dt} = \left[ -\frac{Kv}{J} - \frac{Kt \cdot Kpa}{J} \cdot \psi 2 \right] \sigma 2 \cdot X2 - \left[ \frac{Kt \cdot Kpa}{J} \cdot \psi 1 \right] \sigma 2 \cdot X1. \qquad (23)$$

In order to satisfy existence equation (11) (i.e., equation (23) is negative for any $X_1$ and $X_2$), the gain constants must satisfy the following inequalities:

```
if (σ2•X1 > 0) from equation (20)
      ψ1 = α2 and for  Kt•Kpa•α2 > 0                  => α2 > 0
                           J
else if (σ2•X1 < 0) from equation (20)
      ψ1 = β2 and for  Kt•Kpa•β2 < 0                  => β2 < 0
                           J
if (σ2•X2 > 0) from equation (21)
      ψ2 = γ2 and for  [-Kv - Kt•Kpa•γ2] < 0          => γ2 >  -Kv
                          J        J                         Kt•Kpa
else if (σ2•X2 < 0) from equation (21)
      ψ2 = ζ2 and for  [-Kv - Kt•Kpa•ζ2] > 0          => ζ2 <  -Kv
                          J        J                         Kt•Kpa
```

For $\sigma = \sigma_3$ (seek decelerate), differentiating equation (15) with respect to time and multiplying by equation (15) obtains:

$$\sigma 3 \cdot \frac{d\sigma 3}{dt} = \sigma 3 \cdot \left[ -2 \cdot C2 \cdot X2 \cdot \frac{dX2}{dt} \right] + \sigma 3 \cdot X2.$$

From equation (17) and factoring $\sigma_1 \cdot X_2$ obtains:

$$\sigma 3 \cdot \frac{d\sigma 3}{dt} = \sigma 3 \cdot \left[ -2 \cdot C2 \cdot X2 \cdot \left[ -\frac{Kv}{J} \cdot X2 - \frac{Kt \cdot Kpa}{J} \cdot U + \frac{1}{2 \cdot C2} \right] \right]. \qquad (24)$$

From equations (18) and (19), and ignoring term $\frac{1}{2 \cdot C_2}$ as insignificantly small:

$$\sigma 3 \cdot \frac{d\sigma 3}{dt} = -2 \cdot C2 \cdot X2 \cdot \sigma 3 \cdot \left[ -\frac{Kv}{J} \cdot X2 - \frac{Kt \cdot Kpa}{J} \cdot (\psi 1 \cdot X1 + \psi 2 \cdot X2) \right]$$

$$\sigma 3 \cdot \frac{d\sigma 3}{dt} = -2 \cdot C2 \cdot X2 \cdot \left[ \left[ -\frac{Kv}{J} - \frac{Kt \cdot Kpa}{J} \cdot \psi 2 \right] \sigma 3 \cdot X2 - \left[ \frac{Kt \cdot Kpa}{J} \cdot \psi 1 \right] \sigma 3 \cdot X1 \right]. \quad (25)$$

In order to satisfy existence equation (11) (i.e., equation (25) is negative for any $X_1$ and $X_2$), the gain constants must satisfy the following inequalities:

```
if reverse seeking (X2 > 0) then
{
        if (σ3•X1 > 0) from equation (20)
            ψ1 = α3 and for  Kt•Kpa•α3 < 0              => α3 < 0
                              J
        else if (σ3•X1 < 0) from equation (20)
            ψ1 = β3 and for  Kt•Kpa•β3 > 0              => β3 > 0
                              J
        if (σ3•X2 > 0) from equation (21)
            ψ2 = γ3 and for  [-Kv - Kt•Kpa•γ3] > 0 =>  γ3 < -Kv
                               J       J                     Kt•Kpa
        else if (σ3•X2 < 0) from equation (21)
            ψ2 = ζ3 and for  [-Kv - Kt•Kpa•ζ3] < 0 =>  ζ3 > -Kv
                               J       J                     Kt•Kpa
}


else if forward seeking (X2 < 0) then
{
        if (σ3•X1 > 0) from equation (20)
            ψ1 = α3 and for  Kt•Kpa•α3 > 0              => α3 > 0
                              J
        else if (σ3•X1 < 0) from equation (20)
            ψ1 = β3 and for  Kt•Kpa•β3 < 0              => β3 < 0
                              J
        if (σ3•X2 > 0) from equation (21)
            ψ2 = γ3 and for  [-Kv - Kt•Kpa•γ3] < 0 =>  γ3 > -Kv
                               J       J                     Kt•Kpa
        else if (σ3•X2 < 0) from equation (21)
            ψ2 = ζ3 and for  [-Kv - Kt•Kpa•ζ3] > 0 =>  ζ3 < -Kv
                               J       J                     Kt•Kpa
}
```

For $\sigma = \sigma_4$ (tracking), differentiating equation (16) with respect to time and multiplying by equation (15) obtains:

$$\sigma_4 \cdot \frac{d\sigma_4}{dt} = \sigma_4 \cdot \frac{dX_2}{dt} + \sigma_4 \cdot C_3 \cdot \frac{dX_1}{dt}$$

From equation (17) :

$$\sigma_4 \cdot \frac{d\sigma_4}{dt} = \sigma_4 \cdot \left[ -\frac{Kv}{J} \cdot X2 - \frac{Kt \cdot Kpa}{J} \cdot U + C3 \cdot X2 \right].$$

From equation (19):

$$\sigma4 \cdot \frac{d\sigma4}{dt} = \sigma4 \cdot \left[ -\frac{Kv}{J} \cdot X2 - \frac{Kt \cdot Kpa}{J} \cdot (\psi1 \cdot X1 + \psi2 \cdot X2) + C3 \cdot X2 \right]$$

$$\sigma4 \cdot \frac{d\sigma4}{dt} = \left[ C3 - \frac{Kv}{J} - \frac{Kt \cdot Kpa \cdot \psi2}{J} \right] \sigma4 \cdot X2 - \left[ \frac{Kt \cdot Kpa \cdot \psi1}{J} \right] \sigma4 \cdot X1. \qquad (26)$$

In order to satisfy existence equation (11) (i.e., equation (26) is negative for any $X_1$ and $X_2$), the gain constants must satisfy the following inequalities:

```
if (σ4•X1 > 0) from equation (20)
      ψ1 = α4 and for Kt•Kpa•α4 > 0                 => α4 > 0
                          J
else if (σ4•X1 < 0) from equation (20)
      ψ1 = β4 and for Kt•Kpa•β4 < 0                 => β4 < 0
                          J
if (σ4•X2 > 0) from equation (21)
      ψ2 = γ4 and for [C - Kv - Kt•Kpa•γ4] < 0  => γ4 > C-Kv
                           J      J                      Kt•Kpa
else if (σ4•X2 < 0) from equation (21)
      ψ2 = ζ4 and for [C - Kv - Kt•Kpa•ζ4] > 0 => ζ4 < C-Kv
                           J      J                      Kt•Kpa
```

### Flow Chart Description

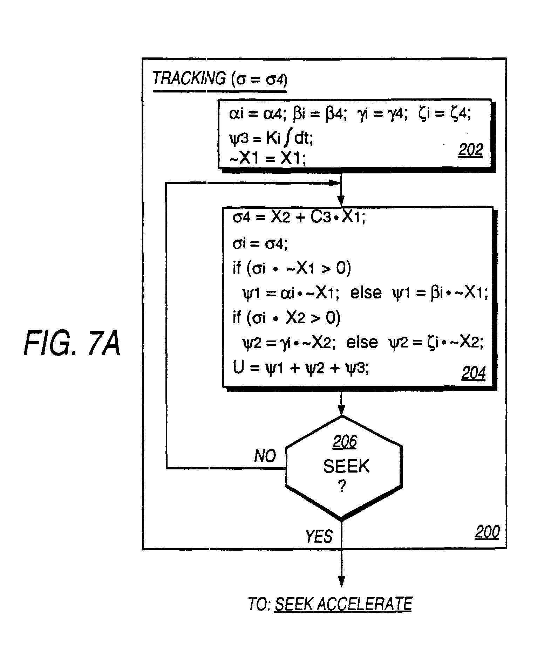

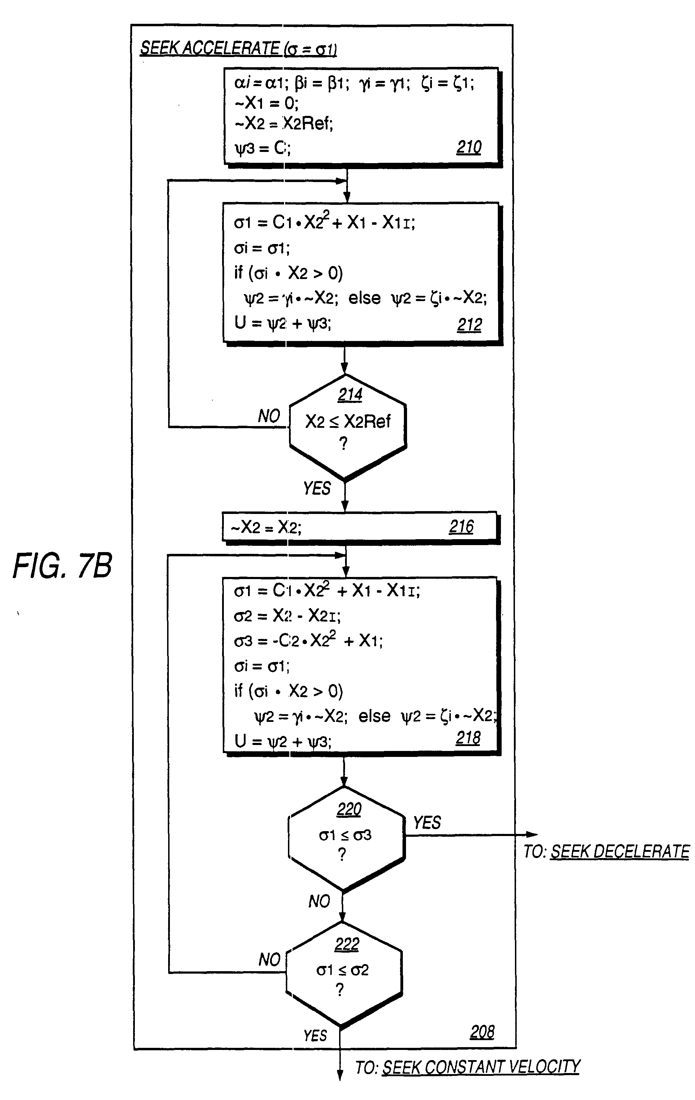

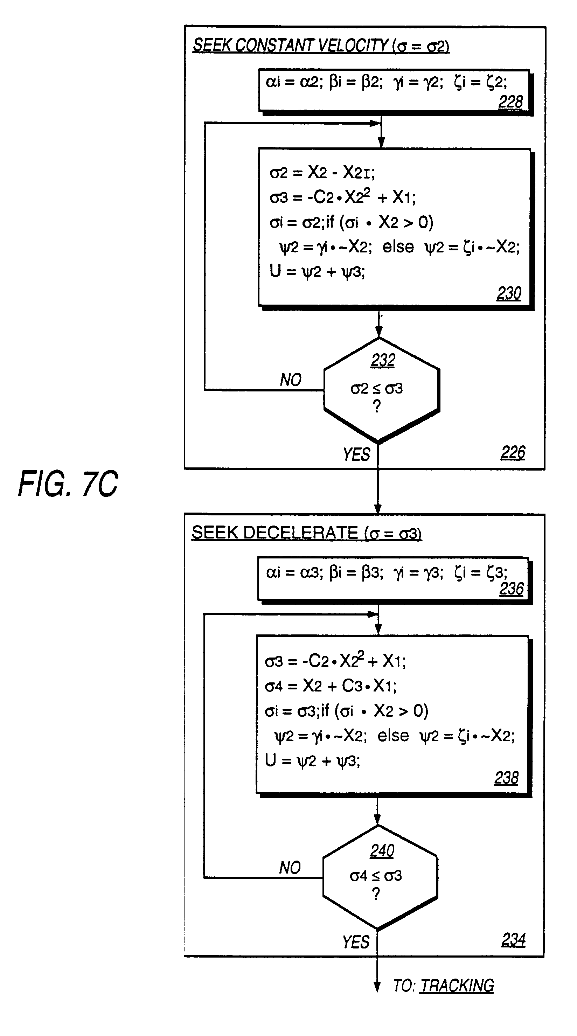

Operation of the sliding mode controller shown in Figure 6 will now be further explained with reference to the flow charts of Figures 7A, 7B, and 7C. Assuming the servo control system is initially in the tracking mode **200** of Figure 7A, the actuator **8** tracks **204** the currently selected track until a seek forward or seek reverse command is received. When a forward seek is initiated, SEEK? **206** is YES and the actuator position reference, POS Ref **18,** is updated to a newly selected track. The initial actuator position error $X_1$ **22** at the output of adder **20** is the difference between the current track **16** output from state estimator **14** and a newly selected track. This initial position error is also shown in Figure 4 as the beginning of trajectory segment $\sigma = \sigma_1$ 80 at $X_{1I}$. Segment $\sigma = \sigma_1$ 80 is a parabolic trajectory that describes the desired acceleration of the actuator toward the selected track.

Referring now to Figure 7B, at the beginning of SEEK ACCELERATE ($\sigma = \sigma_1$) 208, the sliding mode controller initializes various parameters 210. The gain constants in blocks **104** and **106** of Figure 6 are updated to the values corresponding to the acceleration trajectory $\sigma = \sigma_1$ **80.** In order to reduce switching noise during a seek operation, the position error phase state $X_1$ **22** is switched out of the sliding mode control. The $\sigma$ processing block **112** selects, over line **126,** the ground plane as the output of multiplexer **122**. As a result, $-X_1$ **130** is set to zero in order to disable the switching action of multiplier **110** and to remove the contribution of $\psi_1$ from the computation of the VCM command U **28** at the output of adder **103**. Because the position error phase state $\sim X_1$ **130** is disabled, the velocity phase state $\sim X_2$ **132** is initialized to a predetermined value to ensure the actuator begins moving in the desired direction (i.e., moving in reverse toward the selected track). To accomplish this, the $\sigma$ processing block **112** selects, over line **124,** $X_2$Ref **114** as the output of multiplexor **120**. The $\sigma$ processing block **112** also selects, over line **126,** the predetermined constant C **134** as the output of multiplexer **118** (the third input $\psi_3$ **109** to adder **103**). The function of the predetermined constant C **134** and the integrator 116 are discussed in further detail below.

After the control parameters have been initialized for the acceleration trajectory $\sigma = \sigma_1$ **80,** the sliding mode controller **26** continuously computes and outputs the VCM command signal U **28** at the output of adder **103**. Referring to flow chart **212,** $\sigma_1$ is updated according to equation (13) and $\sigma_i$ **128** is assigned to $\sigma_1$. Multiplier **108** (which can be implemented as a simple XOR of the operand sign bits) multiplies $\sigma_i$ by $X_2$ and switches gain block **104** to $\gamma_i$ if the result is positive and to $\zeta_i$ if the result is negative. Gain block **104** multiplies $\sim X_2$ **132** ($X_2$Ref **114**) by the selected gain to

generate $\psi_2$. Adder **103** adds $\psi_1$, $\psi_2$, and $\psi_3$ to generate the VCM command U **28.** Since $\psi_1$ is zero during acceleration and $\psi_3$ is insignificantly small, the VCM command signal U **28** is predominately equal to $\psi_2$.

Amplifier Kpa **30** amplifies the command signal U **28** and applies it to the VCM **10**. As the actuator **8** begins to accelerate in reverse toward the selected track, the read/write head 6 passes over the servo data of the next adjacent track and reads the corresponding track address. The read channel **12** decodes the crack address and transmits it to the state estimator **14** which, in response to the track address and the current VCM command **28,** updates the actuator position signal **16.** Adder **20** outputs the new position error $X_1$ **22,** and differentiator **102** computes the new velocity phase state $X_2$ **100** as $X_1(N) - X_1(N-1)$.

The σ processing block **112** continuously checks to determine when the velocity of the actuator reaches a predetermined value. If $X_2 \leq X_2$Ref? **214** is NO, then the sliding mode controller loops around and computes the next VCM command U **28** according to flow chart **212.** If $X_2 \leq X_2$Ref? **214** is YES, then the σ processing block **112** selects, over line **124**, $X_2$ **100** as the output of multiplexer **120** (setting $\sim X_2 = X_2$ **216**). In other words, once the velocity of the actuator **8** ($X_2$ **100**) reaches a predetermined speed ($X_2$Ref **114**), the sliding mode controller 26 generates the VCM command signal U **28** in flow chart **218** as a function of the velocity phase state $X_2$ **100.**

Continuing now to flow chart **218** shown in Figure 7B, the σ processing block **112** updates $\sigma_1$, $\sigma_2$, and $\sigma_3$ according to equations (13), (14), and (15), respectively. The output σi **128** of σ processing block **112** is assigned to $\sigma_1$. In response to $\sigma_i$ and $X_2$, multiplier **108** sets the state of switching gain block **104** in order to drive $X_1$ and $X_2$ toward the $\sigma_1$ **80** phase trajectory. The next command U **28** is generated and applied to the VCM 10 to continue moving the actuator **8** toward the selected track.

The σ processing block **112** continuously checks the location of the phase states with respect to the acceleration trajectory $\sigma_1$ **80** to determine when to switch to the next trajectory segment. The next trajectory segment will either be the constant velocity segment $\sigma_2$ 82 or, if the seek distance is sufficiently short, the deceleration segment $\sigma_3$ **84.** By comparing the σ values, the σ processing block **112** determines when to switch to the next trajectory. If $\sigma_1 \leq \sigma_3$? **220** is YES, then the σ processing block **112** switches to the deceleration trajectory $\sigma_3$ **84.** Else if $\sigma_1 \leq \sigma_2$? **222** is YES, then the σ processing block **112** switches to the constant velocity trajectory $\sigma_2$ 82. If both **220** and **222** are NO, then the sliding mode controller 26 loops around and computes the next VCM command U 28 according to flow chart **218.**

Referring now to the constant velocity flow chart **226** shown in Figure 7C, first the gain constants for switching gain blocks **104** and **106** are updated **228** to values corresponding to the constant velocity trajectory $\sigma_2$ 82 of Figure 4. Then, in flow chart **230,** the σ processing block **112** updates $\sigma_2$ and $\sigma_3$ according to equations (14) and (15), respectively. The output $\sigma_i$ **128** of σ processing block **112** is assigned to $\sigma_2$. Again, in response to $\sigma_i$ and $X_2$, multiplier **108** sets the state of switching gain block **104** in order to drive $X_1$ and $X_2$ toward the $\sigma_2$ **82** phase trajectory. The next command U **28** is generated and applied to the VCM **10** to continue moving the actuator **8** toward the selected track.

The σ processing block **112** continuously checks the location of the phase states with respect to the constant velocity trajectory $\sigma_2$ **82** to determine when to switch to the deceleration trajectory segment $\sigma_3$ **84.** If $\sigma_2 \leq \sigma_3$? **232** is YES, then the σ processing block **112** switches to the deceleration trajectory $\sigma_3$ **84.** Otherwise, the sliding mode controller **26** loops around and computes the next VCM command U **28** according to flow chart **230.**

Continuing now to the deceleration flow chart **234,** first the gain constants for switching gain blocks **104** and **106** are updated **236** to values corresponding to the deceleration trajectory $\sigma_3$ **84** of Figure 4. Then, in flow chart **238,** the σ processing block **112** updates $\sigma_3$ and $\sigma_4$ according to equations (15) and (16), respectively. The output $\sigma_i$ **128** of σ processing block **112** is assigned to $\sigma_3$. Again, in response to $\sigma_i$ and $X_2$, multiplier **108** sets the state of switching gain block **104** in order to drive $X_1$ and $X_2$ toward the $\sigma_3$ **84** phase trajectory. The next command U 28 is generated and applied to the VCM 10 to decelerate the actuator 8 toward the selected track.

The σ processing block **112** continuously checks the location of the phase states with respect to the deceleration trajectory $\sigma_3$ **84** to determine when to switch to the tracking trajectory segment $\sigma_4$ **86.** If $\sigma_4 \leq \sigma_3$? **240** is YES, then the σ processing block **112** switches to the tracking trajectory $\sigma_4$ **86.** Otherwise, the sliding mode controller **26** loops around and computes the next VCM command U **28** according to flow chart **238.**

When the sliding mode controller **26** switches to tracking mode, the read channel process the servo burst information **42** recorded adjacent to the selected track's centerline in order to generate an actuator **8** offset position relative to the centerline. In response to the offset position and the command signal U **28**, the state estimator **14** generates the estimated actuator position **16** which is subtracted from the reference selected crack position **18** to generate the position error $X_1$ **22.**

Referring again to flow chart **200** of Figure 7A, the gain constants for switching gain blocks **104** and **106** are updated **202** to values corresponding co the tracking trajectory $\sigma_4$ **86** of Figure 4. The σ processing block **112** selects via line **126** the output of integrator **116** as the output of multiplexor **118** (i.e., $\psi_3$). The σ processing block **112** also switches the position error phase state $X_1$ **22** back into the sliding mode computation, by selecting via line **126,** as the output of multiplexer **122**, the position error phase state $X_1$ **22** as the input to multiplier **110**. Again, the position error phase state $X_1$ **22** is not used during seeks in order to reduce switching noise.

Referring now to flow chart <u>204,</u> the σ processing block **112** updates $\sigma_4$ according to equations (16). The output $\sigma_i$ **128** of σ processing block **112** is assigned to $\sigma_4$. In response to $\sigma_i$, $X_1$, and $X_2$, multipliers **108** and **110** set the state of switching gain blocks **104** and **108,** respectively, in order to drive $X_1$ and $X_2$ toward the $\sigma_4$ **86** phase trajectory. The next command U **28** is generated and applied to the VCM 10 to continue cracking the centerline of the selected track.

After reaching the selected track, several biasing forces can cause the actuator **8** to have a steady state DC offset from the centerline. Typical biasing forces include the radial component of the windage caused by the rotating disks, tilt of the disk stack, biases in the flexible cables, and electrical offsets. To compensate for these biasing forces and drive the steady state position error to zero, an integrator **116** integrates the position error phase state $X_1$ **22** and its output **109** is summed **103** into the output **28** of the sliding mode controller 26.

The biasing forces do not vary with time, however, they do vary with the radial position of the actuator **8.** Therefore, the steady state integration value **109** corresponding to the biasing forces for each track is stored in memory. When seeking a selected new track, the integrator **116** is disabled and the steady state integration value stored in memory corresponding to the selected new track is added **103** as a constant **134** to the control signal **28.** When the actuator **8** reaches the selected new track and the head has settled sufficiently, the integrator **116** is re-enabled and its output added **103** back into the control signal **28.**

For reverse seeks, the sliding mode controller 26 operates as described in the flow charts of Figures 7A, 7B, and 7C except that the inequalities are reversed. The σ processing block **112** can also adjust the slope of the linear phase trajectory segment as shown in Figure 3D. An alternative embodiment of the σ processing block **112** would be to compare the position error and velocity phase states to values stored in a look up table where the stored values represent the phase plane trajectory shown in Figure 4.

**Acceleration Embodiment**

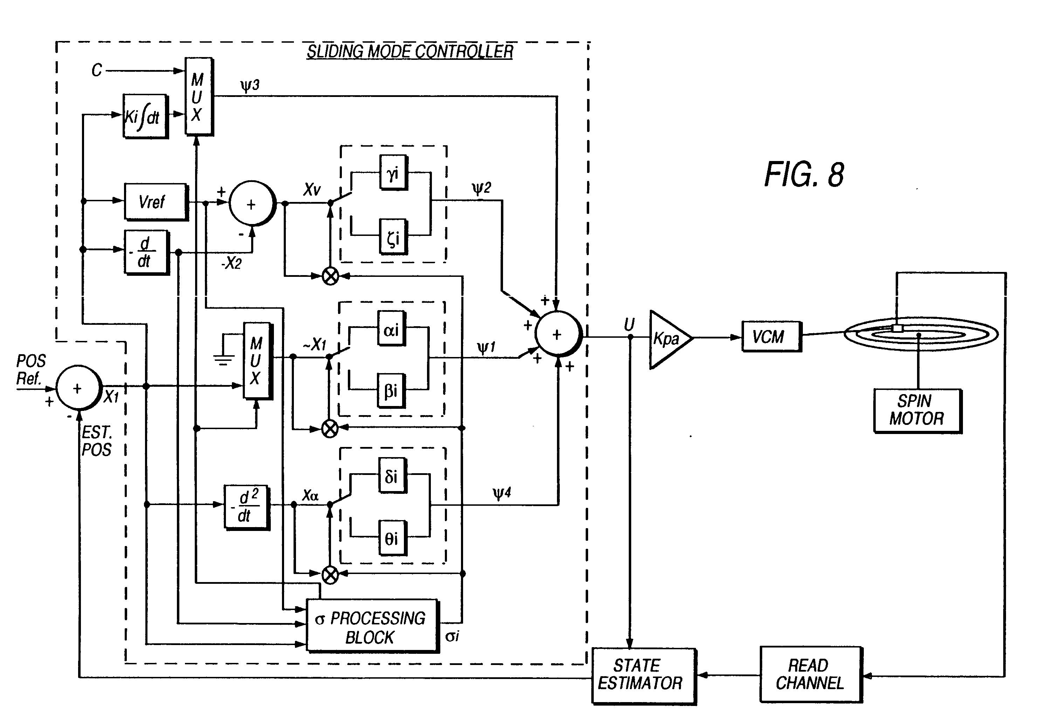

An other sliding mode controller is shown in Figure 8. The sliding mode operation is the same as that of Figure 6 during the constant velocity seek mode ($\sigma = \sigma_2$) and the tracking mode ($\sigma = \sigma_4$). During seek accelerate ($\sigma = \sigma_1$) and seek decelerate ($\sigma = \sigma_3$), however, the state space is defined in the plane $(X_v, X_\alpha)$, where $X_v$ is an actuator velocity error phase state and $X_\alpha$ is an actuator acceleration phase state.

During seek accelerate and seek decelerate, a reference velocity Vref is generated as a function of the position error $X_1$ corresponding to the velocity profiles $\sigma_1$ **80** and $\sigma_3$ **84** shown in Figure 4. The reference velocity generator can be implemented with a lookup table or with polynomial equations. An actuator velocity error phase state $X_v$ is generated by subtracting an estimated actuator velocity -$X_2$ from the reference velocity Vref. An actuator acceleration phase state $X_\alpha$ is generated by taking the second derivative of the position error $X_1$. Phase states $X_v$ and $X_\alpha$ are multiplied by respective switching gain blocks to generate control signals $\psi_2$ and $\psi_4$. As discussed with reference to Figures 6 and 7, control signal $\psi_1$ is disabled during seeks and $\psi_3$ is insignificantly small. Therefore, the motor control signal U is a function of $\psi_2$ and $\psi_4$ during seek accelerate and seek decelerate. During seek at constant velocity ($\sigma = \sigma_2$) and tracking ($\sigma = \sigma_4$), Vref is set to zero such that $X_v = X_2$, and $\psi_4$ is disabled by setting the gains δ and θ in the switching gain block to zero. In this manner, the sliding mode controller of Figure 8 operates as described in Figures 6 and 7 during seek at constant velocity and tracking.

The trajectory segments $\sigma_i$ used by the σ processing block of Figure 8 are defined as:

$$\sigma_1 = [X_v - C_1 \cdot X_\alpha] \; ;$$

$$\sigma_2 = X_2 - X_{2I};$$

$$\sigma_3 = -[X_v - C_2 \cdot X_\alpha];$$

$$\sigma_4 = X_2 + C_3 \cdot X_1;$$

where

$C_1 =$ a predetermined acceleration constant;
$X_{1I} =$ an initial actuator position error;
$X_{2I} =$ a predetermined constant position error velocity;

$C_2$ = a predetermined deceleration constant; and
$C_3$ = a predetermined slope of the linear deceleration segment.

The σ processing block switches between trajectory segments according to the following inequalities:

$\sigma_1$ to $\sigma_2$ when $|X_2| > X_{2I}$;
$\sigma_2$ to $\sigma_3$ when $|Vref (k)| < |Vref (k-1)|$;
$\sigma_3$ to $\sigma_4$ when $|X_1| <$ predetermined track acquire threshold; and
$\sigma_1$ to $\sigma_3$ when $(X_1 * X_v < 0)$ and $(|X_2| \leq |V_{2I}|)$.

**Lookup Table**

The σ processing block **112** of the present invention can be implemented using a lookup table rather than switching between trajectory segments. As mentioned previously, the phase states can be used as an index into a lookup table in order to implement the phase state trajectory σ. To reduce the size of the table, the phase state trajectory is redefined according to the following derivation:

$$\text{distance} = 1/2 \cdot Acc \cdot t^2 \text{ implies}$$

$$X_1 - X_{1I} = 1/2 \cdot Acc \cdot t^2; \tag{27}$$

where:

$X_{1I}$ = an initial actuator position error;
$Acc$ = a predetermined acceleration/deceleration constant; and
$t$ = time.

Solving for t in equation (27) provides:

$$t = (2 \cdot (X_1 - X_{1I})/Acc)^{1/2}. \tag{28}$$

Since velocity = $-X_2 = Acc \cdot t$, then after substituting t from equation (28) provides:

$$X_{2(Ideal)} = -(2 \cdot (X_1 - X_{1I}) \cdot Acc)^{1/2}. \tag{29}$$

During seeks, the phase state trajectory σ is defined as:

$$\sigma = X_2 + (2 \cdot (X_1 - X_{1I}) \cdot Acc)^{1/2} = 0 \tag{30}$$

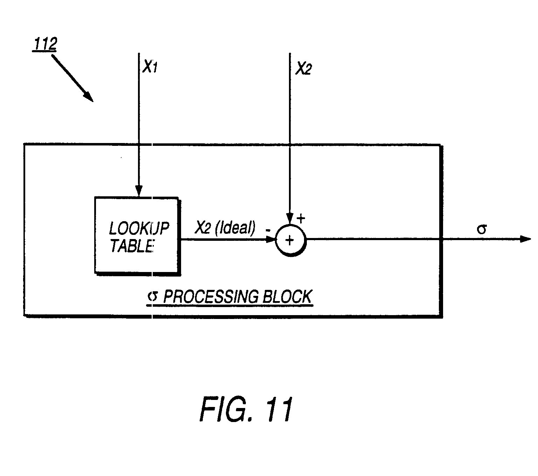

where $X_2$(Ideal) in equation (29) is the ideal actuator velocity and $X_2$ in equation (30) is the estimated actuator velocity. The ideal velocity of equation (29) can be computed using a lookup table indexed by one phase state, $X_1$, thereby reducing the size of the lookup table and the overall cost of the sliding mode controller. Figure 11 illustrates the lookup table implementation of the σ processing block **112.**

**Boundary Layer**

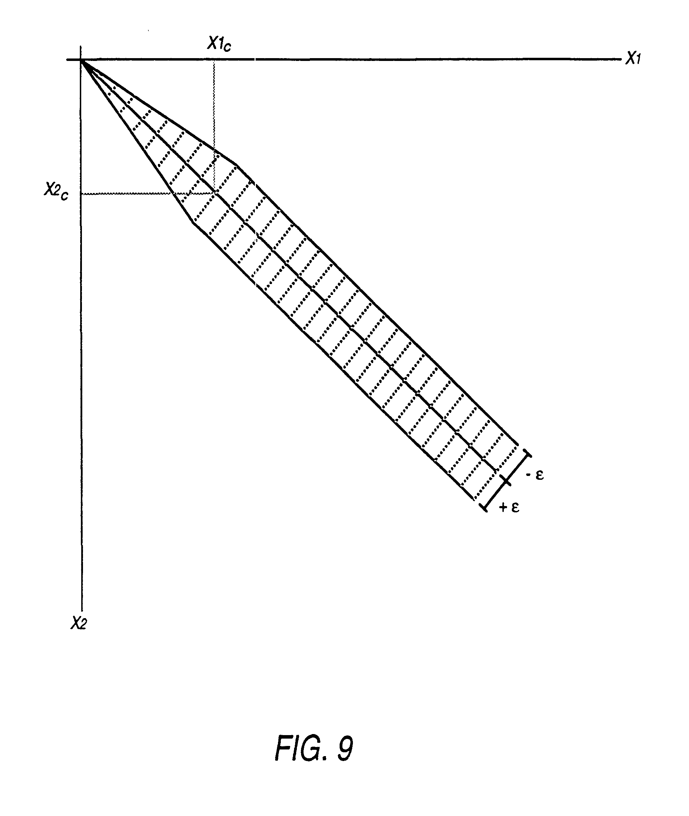

The sliding mode controller can provide further improvements in chatter reduction by defining a boundary layer around the phase state trajectory σ. This is illustrated in Figure 9 which shows a linear segment for the phase state trajectory σ having a boundary layer defined as an offset $\pm\varepsilon$ added to σ. The boundary layer reduces chatter by reducing the amount of switching in the system. Without the boundary layer, the switching gain blocks **104** and **106** of Figure 6 will switch every time the phase states cross the sliding line (i.e., every time σ changes sign). The boundary layer results in hysteresis which causes the gain blocks to switch only after the phase states cross over the boundary line.

The boundary layer offset $\pm\varepsilon$ added to the phase state trajectory $\sigma$ is a predetermined constant until the phase states reach a predetermined value $(X_{1_c}, X_{2_c})$ at which time the offset $\pm\varepsilon$ is computed as the sum of the phase states $X_1$ and $X_2$ so that the boundary layer converges to the origin of the phase plane, as shown in Figure 9, in order to prevent oscillations around the origin. The $\sigma$ processing block **112** of Figure 6 computes $\sigma_i$ as follows:

if switching gain blocks **{104,106}** are set to select gains $\{\gamma_i, \alpha_i\}$ then

$$\sigma_i = \sigma + \varepsilon:$$

else if switching gain blocks {104,106} are set to select gains $\{\zeta_i, \beta_i\}$ then

$$\sigma_i = \sigma - \varepsilon;$$

where:

$$\sigma = X_2 + C \cdot X_1;$$

$$\varepsilon = \text{constant for } X_1 > X_{1_c} \text{ and } X_2 > X_{2_c};$$

and

$$\varepsilon = |X_1| + |X_2| \text{ for } X_1 \leq X_{1_c} \text{ and } X_2 \leq X_{2_c}.$$

In an alternative embodiment, rather than compute $\varepsilon$ as the sum of $X_1$ and $X_2$ when $X_1 \leq X_{1_c}$ and $X_2 \leq X_{2_c}$, the slope of the sliding line is changed (i.e., $\sigma = X_2 + C_1 \cdot X_1$; or $\sigma = X_2 + C_2 \cdot X_1$; depending on the current state of the switching gain blocks {**104,106**}).

**Smoothing Function**

The sliding mode controller can achieve still better chatter reduction by generating the VCM control signal U proportional to an integral of sgn($\sigma$). In effect, the control signal is smoothed to attenuate the high frequency components that can generate electromagnetic and/or acoustic emissions.

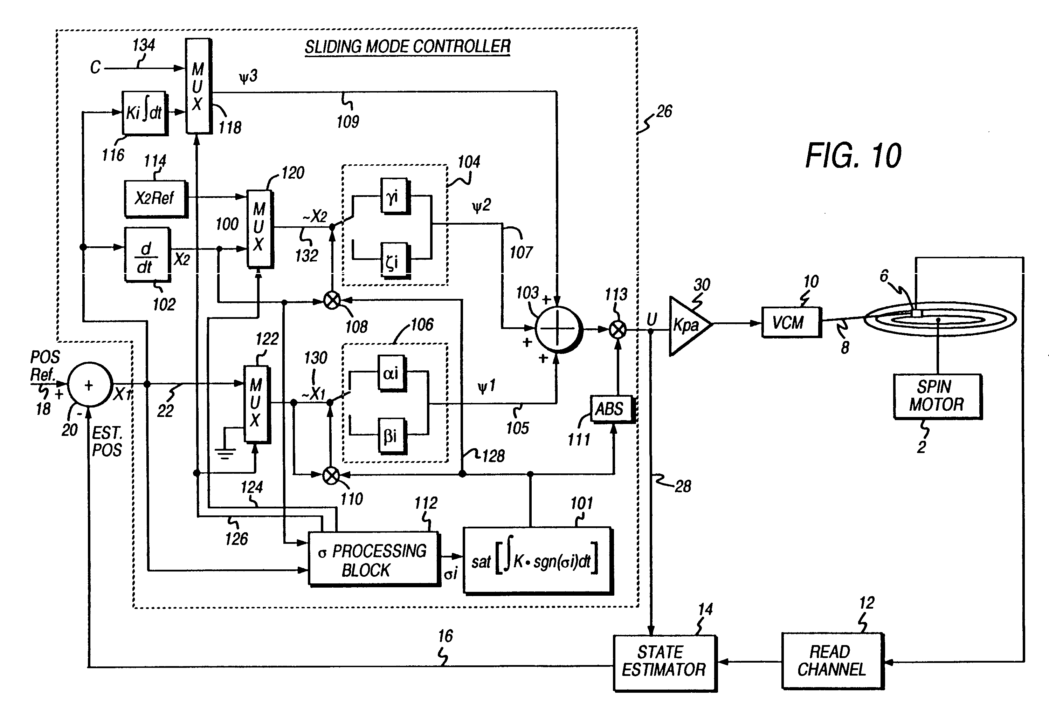

In an embodiment of the present invention, as shown in Figure 10, $\sigma_i$ from $\sigma$ processing block **112** is input into an integrating block **101** which computes the following function:

$$\text{sat}\left[\int K \cdot \text{sgn}(\sigma i)\, dt\right]; \text{ where:}$$

$$\text{sat}(x) = \begin{array}{ll} -1 & \text{for } x < -1; \\ x & \text{for } -1 \leq x \leq 1; \\ +1 & \text{for } x > 1. \end{array}$$

The output **128** of the integrating block **101** controls the state of switching gain blocks **{104,106}** and is also input into an absolute value function **111.** The control signal at the output of adder 103 is then attenuated by the absolute value of the integrated sgn($\sigma_i$) through a multiplier **113** to generate the smoothed VCM control signal U.

Although the smoothing function of the present invention has been described as a modification to the controller of Figure 6, the same modification is equally applicable to the controller of Figure 8.

Many changes in form and detail could be made without departing from the scope of the present invention as defined in the claims; the particular embodiments disclosed are not intended to be limiting. For instance, the sliding mode controller may be implemented in hardware or software, and higher order phase states could be used in place of, or in addition to, the particular phase states disclosed. In yet another embodiment, rather than embed the servo data on every disk within the sectors of user data as shown in Figure 2A, the servo data can be recorded on a dedicated servo disk in a disk array.

**Claims**

1. Apparatus for use in at least one of reading and writing data recorded on a data storage medium (4) by means of a read/write head whose position relative to the medium is adjustable by an actuator (8) operated by a motor (10),

   the apparatus comprising;
   a sliding mode controller (26) operable to output a motor control signal (U) for use in controlling said motor, the controller comprising;
   input means (12,14,20) for inputting an actuator position error signal (X1) indicative of a difference between an estimated actuator position and a desired actuator position;
   generating means (122;120,102) for generating from the actuator position error signal phase state signals ($\sim$X1, $\sim$X2) defining a trajectory in a state space;
   calculating means (112) for calculating a parameter $\sigma$ from the phase state signals in accordance with a predetermined relationship ($\sigma$1, $\sigma$2, $\sigma$3, $\sigma$4) defining a sliding line in the state space;
   control means using the value of the parameter $\sigma$ to control a switching gain block (106) such that the gain is switched between first and second gains ($\alpha$,$\beta$) when the trajectory crosses the sliding line to thereby apply the gain of the gain block to the phase state signals to obtain a control signal (u) output; and
   generating means (103,113) for generating the a motor control signal from the control signal output;

   **characterized by** further comprising;
   an integrating means (101) for integrating the parameter $\sigma$ to obtain a smoothed parameter value for use in controlling the switching gain block and a multiplier (113) for multiplying the control signal by the magnitude of the smoothed parameter value to thereby attenuate high frequency components in the motor control signal.

2. Apparatus as claimed in claim 1 wherein the integrating means (101) is operable to integrate a sign of said phase plane variable (sgn($\sigma$i)).

3. Apparatus as claimed in claim 2 comprising absolute value function means (111) operable to form the absolute value of the output of the integrating means and to input said absolute value to said multiplier.

4. Apparatus as claimed in claim 4, wherein one of the phase state signals is an actuator position error velocity signal ($\sim$X2) generated by differentiating the actuator position error signal.

5. Apparatus as claimed in any preceding claim 5, further comprising:

   (a) a second input connected to receive an actuator velocity error signal (Xv);
   (b) a second switching gain block (104) operable to selectively multiply a second phase state signal (132,$\sim$X2), proportional to the actuator velocity error signal, by a third gain ($\gamma$i) or by a fourth gain ($\zeta$i) according to a value of a second phase plane variable representative of the state of the second phase state signal and a second phase plane trajectory in accordance with a second predetermined relationship to generate a second proportional phase state signal;
   (c) a third input connected to receive an actuator acceleration signal X$\alpha$; and
   (d) a third switching gain block operable to selectively multiply a third phase state signal, proportional to the actuator acceleration signal X$\alpha$, by a fifth gain ($\sigma$i) or by a sixth gain ($\theta$i) according to a value of a third phase plane variable representative of the state of the third phase state signal and the second phase plane trajectory in accordance with a third predetermined relationship to generate a third proportional phase state signal ($\psi_4$) added with the first proportional phase state signal and the second proportional phase state signal to generate the motor control signal.

6. Apparatus as claimed in claim 1, further comprising an integrator (116) operable to integrate the actuator position error signal X1 to generate an integrated signal ($\psi_3$) added to the first proportional phase state signal to generate the computed control signal.

7. Apparatus as claimed in claim 2 wherein the switching gain block (106) is switched according to the sign of the output of the integrating means (101).

8. Apparatus as claimed in any preceding claim comprising a magnetic disk drive storage system comprising said actuator (8) and said motor (10) controlled by said motor control signal.

9. A method of control for use in at least one of reading and writing data recorded on a data storage medium (4) by means of a read/write head whose position relative to the medium is adjustable by an actuator (8) operated by a motor (10),

the method comprising;
operating a sliding mode controller (26) to output a motor control signal (U) for use in controlling said motor, the operation of the controller comprising the steps of;
inputting an actuator position error signal (X1) indicative of a difference between an estimated actuator position and a desired actuator position;
generating from the actuator position error signal phase state signals ($\sim$X1, $\sim$X2) defining a trajectory in a state space;
calculating a parameter $\sigma$ from the phase state signals in accordance with a predetermined relationship ($\sigma$1, $\sigma$2, $\sigma$3, $\sigma$4) defining a sliding line in the state space;
using the value of the parameter $\sigma$ to control a switching gain block (106) such that the gain is switched between first and second gains ($\alpha$,$\beta$) when the trajectory crosses the sliding line;
applying the gain of the gain block to the phase state signals to obtain a control signal (u) output; and
generating the motor control signal from the control signal output;

**characterized by**;
integrating the parameter $\sigma$ to obtain a smoothed parameter value for use in controlling the switching gain block and multiplying the control signal by the magnitude of the smoothed parameter value to thereby attenuate high frequency components in the motor control signal.

10. A method as claimed in claim 9 wherein the integrating step comprises integrating a sign of said phase plane variable (sgn($\sigma$i)).

11. A method as claimed in claim 10 comprising the step of forming the absolute value of the output of the integrating step and using said absolute value in said multiplying step as the smoothed parameter value.

12. A method as claimed in any preceding claims, wherein one of the phase state signals is an actuator position error velocity signal ($\sim$X2) and including the step of generating the error velocity signal by differentiating the actuator position error signal (X1).

13. A method as claimed in claims 9-11, further comprising the steps of:

(a) inputting an actuator velocity error signal (Xv);
(b) operating a second switching gain block (104) to selectively multiply a second phase state signal (132,$\sim$X2), proportional to the actuator velocity error signal, by a third gain ($\gamma$i) or by a fourth gain ($\zeta$i) according to a value of a second phase plane variable representative of the state of the second phase state signal relative to a second phase plane trajectory in accordance with a second predetermined relationship to generate a second proportional phase state signal;
(c) inputting an actuator acceleration signal X$\alpha$; and
(d) operating a third switching gain block to selectively multiply a third phase state signal, proportional to the actuator acceleration signal X$\alpha$, by a fifth gain ($\sigma$i) or by a sixth gain ($\theta$i) according to a value of a third phase plane variable representative of the state of the third phase state signal relative to the second phase plane trajectory in accordance with a third predetermined relationship to generate a third proportional phase state signal ($\psi$4) added with the first proportional phase state signal and the second proportional phase state signal to generate the motor control signal.

14. A method as claimed in claim 9, further comprising the step of integrating the actuator position error signal X1 to generate an integrated signal ($\psi_3$) added to the first proportional phase state signal to generate the motor control signal.

15. A method as claimed in claim 10 including the step of switching the switching gain block (106) according to the sign of the output of the integrating means (101).

16. A method as claimed in any of claims 9 to 15 wherein the gains of the switching gain block are programmable.

17. A method as claimed in any of claims 9 to 15 comprising controlling a magnetic disk drive storage system comprising said actuator (8) and said motor (10) controlled by said motor control signal.

**Patentansprüche**

1. Vorrichtung zur Verwendung beim Lesen und/oder Schreiben von auf einem Datenspeichermedium (4) gespeicherten Daten mittels eines Lese-/Schreibkopfes, dessen Position relativ zu dem Medium mittels eines von einem Motor (10) betätigten Aktuator (8) einstellbar ist, wobei die Vorrichtung versehen ist mit:

   einem Gleitmodusregelgerät (26), das betätigbar ist, um ein Motorregelsignal (U) zur Verwendung beim Regeln des Motors auszugeben, wobei das Regelgerät versehen ist mit:

   einer Eingabeanordnung (12, 14, 20) zum Eingeben eines Aktuatorpositionsfehlersignals (X1), welches indikativ für die Differenz zwischen einer geschätzten Aktuatorposition und einer gewünschten Aktuatorposition ist;

   einer Erzeugungsanordnung (122, 120, 102), um aus dem Aktuatorpositionsfehlersignal Phasenstatussignale (~X1, ~X2) zu erzeugen, die eine Trajektorie in einem Statusraum bestimmen;

   einer Berechnungsanordnung (112), um aus den Phasenstatussignalen einen Parameter σ gemäß einer vorbestimmten Beziehung (σ1, σ2, σ3, σ4) zu berechnen, die eine Gleitlinie in dem Statusraum definiert;

   einer Regelanordnung, die den Wert des Parameters σ benutzt, um einen umschaltenden Verstärkerblock (106) so anzusteuern, dass die Verstärkung zwischen einer ersten und einer zweiten Verstärkung (α, β) umgeschaltet wird, wenn die Trajektorie die Gleitlinie schneidet, so dass die Verstärkung des Verstärkerblocks auf die Phasenstatussignale angewendet wird, um die Ausgabe eines Regelsignals (u) zu erreichen; und

   einer Erzeugungsanordnung (103, 113) zum Erzeugen eines Motorregelsignals von dem Regelsignalausgang;

   **dadurch gekennzeichnet, dass** ferner vorgesehen sind:
   eine Integrationsanordnung (101) zum Integrieren des Parameters σ, um einen geglätteten Parameterwert zur Verwendung beim Ansteuern des umschaltenden Verstärkerblocks zu erhalten, sowie ein Multiplizierer (113) zum Multiplizieren des Regelsignals mit der Größe des geglätteten Parameterwerts, um dadurch Hochfrequenzkomponenten in dem Motorregelsignal abzuschwächen.

2. Vorrichtung nach Anspruch 1, bei welchem die Integrationsanordnung (101) betätigbar ist, um ein Vorzeichen der Phasenebenenvariable (sgn(σi)) zu integrieren.

3. Vorrichtung nach Anspruch 2, versehen mit einer Absolutwertfunktionsanordnung (111), die betätigbar ist, um den Absolutwert des Ausgangs der Integrationsanordnung zu bilden und diesen Absolutwert an den Multiplizierer anzulegen.

4. Vorrichtung nach Anspruch 1, wobei eines der Phasenstatussignale ein Aktuatorpositionsfehlergeschwindigkeitssignal (~X2) ist, welches durch Differenzieren des Aktuatorpositionsfehlersignals erhalten wird.

5. Vorrichtung nach einem der vorhergehenden Ansprüche, ferner versehen mit:

   (a) einem zweiten Eingang, der angeschlossen ist, um ein Aktuatorgeschwindigkeitsfehlersignal (Xv) zu erhalten;

   (b) einem zweiten umschaltenden Verstärkerblock (104), der betätigbar ist, um selektiv ein zweites Phasenstatussignal (132, ~X2), welches proportional zu dem Aktuatorgeschwindigkeitsfehlersignal ist, mit einer drit-

ten Verstärkung ($\gamma$i) oder mit einer vierten Verstärkung ($\zeta$i) gemäß einem Wert einer zweiten Phasenebenenvariablen zu multiplizieren, die repräsentativ für den Status des zweiten Phasenstatussignals und eine zweite Phasenebenentrajektorie gemäß einer zweiten vorbestimmten Beziehung ist, um ein zweites proportionales Phasenstatussignal zu erzeugen;

(c) einem dritten Eingang, der angeschlossen ist, um ein Aktuatorbeschleunigungssignal (X$\alpha$) zu erhalten; und

(d) einem dritten umschaltenden Verstärkerblock, der betätigbar ist, um ein drittes Phasenstatussignal, welches proportional zu dem Aktuatorbeschleunigungssignal (X$\alpha$) ist, mit einer fünften Verstärkung ($\alpha$i) oder mit einer sechsten Verstärkung ($\theta$i) gemäß einem Wert einer dritten Phasenebenenvariable zu multiplizieren, die repräsentativ für den Status des dritten Phasenstatussignals und die zweite Phasenebenentrajektorie gemäß einer dritten vorbestimmten Beziehung ist, um ein drittes proportionales Phasenstatussignal ($\psi$4) zu erzeugen, das zu dem ersten proportionalen Phasenstatussignal und dem zweiten proportionalen Phasenstatussignal hinzu addiert wird, um das Motorregelsignal zu erzeugen.

6. Vorrichtung nach Anspruch 1, ferner versehen mit einem Integrator (116), der betätigbar ist, um das Aktuatorpositionsfehlersignal (X1) zu integrieren, um ein integriertes Signal ($\psi$3) zu erzeugen, welches zwecks Erzeugen des berechneten Regelsignals zu dem ersten proportionalen Phasenstatussignal hinzu addiert wird.

7. Vorrichtung nach Anspruch 2, bei welchem der umschaltende Verstärkerblock (106) entsprechend dem Vorzeichen des Ausgangs der Integrieranordnung (101) umgeschaltet wird.

8. Vorrichtung nach einem der vorhergehenden Ansprüche, umfassend ein Magnetplattenantriebsspeichersystem mit dem Aktuator (8) und dem Motor (10), der mittels des Motorregelsignals geregelt wird.

9. Regelverfahren zur Verwendung beim Lesen und/oder Schreiben von auf einem Datenspeichermedium (4) aufgezeichneten Daten mittels eines Lese/Schreibkopfes, dessen Position relativ zu dem Medium mittels eines von einem Motor (10) betätigten Aktuators (8) einstellbar ist, wobei im Zuge des Verfahrens:

ein Gleitmodusregelgerät (26) betätigt wird, um ein Motorregelsignal (U) zur Verwendung beim Regeln des Motors auszugeben, wobei die Betätigung des Regelgeräts die folgenden Schritte umfaßt:

Eingeben eines Aktuatorpositionsfehlersignals (X1), welches indikativ für die Differenz zwischen einer geschätzten Aktuatorposition und einer gewünschten Aktuatorposition ist;

Erzeugen von Phasenstatussignalen ($\sim$X1, $\sim$X2), die eine Trajektorie in einem Statusraum bestimmen, ausgehend von dem Aktuatorpositionsfehlersignal;

Berechnen eines Parameters ($\sigma$) aus den Phasenstatussignalen gemäß einer vorbestimmten Beziehung ($\sigma$1, $\sigma$2, $\sigma$3, $\sigma$4), die eine Gleitlinie in dem Statusraum definiert;

Verwenden des Wertes des Parameters ($\sigma$) zum Ansteuern eines umschaltenden Verstärkerblocks (106), so dass die Verstärkung zwischen einer ersten und einer zweiten Verstärkung ($\alpha$, $\beta$) umgeschaltet wird, wenn die Trajektorie die Gleitlinie schneidet;

Anwenden der Verstärkung des Verstärkerblocks auf die Phasenstatussignale, um die Ausgabe eines Regelsignals (u) zu bewirken; und

Erzeugen des Motorregelsignals aus dem Regelsignalausgang;

**dadurch gekennzeichnet, dass**
der Parameter ($\sigma$) integriert wird, um einen geglätteten Parameterwert zur Verwendung beim Ansteuern des umschaltenden Verstärkerblocks zu erhalten, und das Regelsignal mit der Größe des geglätteten Parameterwerts multipliziert wird, um so Hochfrequenzkomponenten in dem Motorregelsignal abzuschwächen.

10. Verfahren nach Anspruch 9, bei welchem der Integrationsschritt das Integrieren eines Vorzeichens der Phasenebenenvariable (sgn($\sigma$i)) umfasst.

11. Verfahren nach Anspruch 10, bei welchem der Absolutwert des Ausgangs des Integrationsschrittes gebildet wird und dieser Absolutwert in dem Multiplizierschritt als der geglättete Parameterwert benutzt wird.

12. Verfahren nach einem der vorhergehenden Ansprüche, bei welchem eines der Phasenstatussignale ein Aktuatorpositionsfehlergeschwindigkeitssignal ($\sim$X2) ist und bei welchem das Fehlergeschwindigkeitssignal durch Differenzieren des Aktuatorpositionsfehlersignals (X1) erzeugt wird.

13. Verfahren nach einem der Ansprüche 9 bis 11, welches ferner die folgenden Schritte umfasst:

   (a) Eingeben eines Aktuatorgeschwindigkeitsfehlersignals (Xv);

   (b) Betätigen eines zweiten umschaltenden Verstärkerblocks (104), um selektiv ein zweites Phasenstatussignal (132, $\sim$X2), welches proportional zu dem Aktuatorgeschwindigkeitsfehlersignal ist, mit einer dritten Verstärkung ($\gamma$i) oder mit einer vierten Verstärkung ($\zeta$i) entsprechend einem Wert einer zweiten Phasenebenenvariable zu multiplizieren, die repräsentativ für den Status des zweiten Phasenstatussignals relativ zu einer zweiten Phasenebenentrajektorie gemäß einer zweiten vorbestimmten Beziehung ist, um ein zweites proportionales Phasenstatussignal zu erzeugen;

   (c) Eingeben eines Aktuatorbeschleunigungssignals (x$\alpha$) und

   (d) Betätigen eines dritten umschaltenden Verstärkerblocks, um selektiv ein drittes Phasenstatussignal, welches proportional zu dem Aktuatorbeschleunigungssignal (X$\alpha$) ist, mit einer fünften Verstärkung ($\sigma$i) oder einer sechsten Verstärkung ($\theta$i) gemäß einem Wert einer dritten Phasenebenenvariable zu multiplizieren, die repräsentativ für den Status des dritten Phasenstatussignals relativ zu der zweiten Phasenebenentrajektorie gemäß einer dritten vorbestimmten Beziehung ist, um ein drittes proportionales Phasenstatussignal ($\psi$4) zu erzeugen, welches zu dem ersten proportionalen Phasenstatussignal und dem zweiten proportionalen Phasenstatussignal addiert wird, um das Motorregelsignal zu erzeugen.

14. Verfahren nach Anspruch 9, bei welchem ferner das Aktuatorpositionsfehlersignal (X1) integriert wird, um ein integriertes Signal ($\psi$3) zu erzeugen, welches zu dem ersten proportionalen Phasenstatussignal hinzu addiert wird, um das Motorregelsignal zu erzeugen.

15. Verfahren nach Anspruch 10, bei welchem der umschaltende Verstärkerblock (106) gemäß dem Vorzeichen des Ausgangs der Integrieranordnung (101) umgeschaltet wird.

16. Verfahren nach einem der Ansprüche 9 bis 15, bei welchem die Verstärkungen des umschaltenden Verstärkerblocks programmierbar sind.

17. Verfahren nach einem der Ansprüche 9 bis 15, bei welchem ein Magnetplattenantriebsspeichersystem geregelt wird, welches den Aktuator (8) und den von dem Motorregelsignal geregelten Motor (10) aufweist.

**Revendications**

1. Appareil destiné à être utilisé dans au moins l'une d'une lecture ou d'une écriture de données enregistrées sur un support de stockage de données (4) au moyen d'une tête de lecture/écriture dont la position par rapport au support est réglable par un actionneur (8) actionné par un moteur (10),
   l'appareil comprenant :

   un dispositif de commande de mode de glissement (26) ayant pour fonction de fournir en sortie un signal de commande de moteur (U) pour une utilisation dans la commande dudit moteur, ledit dispositif de commande comprenant :
   un moyen d'entrée (12, 14, 20) pour fournir en entrée un signal d'erreur de position d'actionneur (X1) représentatif d'une différence entre une position d'actionneur estimée et une position d'actionneur souhaitée ;
   un moyen générateur (122 ; 120, 102) pour générer à partir du signal d'erreur de position d'actionneur des signaux d'état de phase ($\sim$X1, $\sim$X2) définissant une trajectoire dans un espace des états ;
   un moyen de calcul (112) pour calculer un paramètre $\sigma$ à partir de signaux d'état de phase en conformité avec une relation prédéterminée ($\sigma$1, $\sigma$2, $\sigma$3, $\sigma$4) définissant une ligne de glissement dans l'espace des états ;

un moyen de commande utilisant la valeur du paramètre σ pour commander un bloc de gain de commutation (106) de telle façon que le gain soit commuté entre des premier et second gains (α, β) lorsque la trajectoire franchit la ligne de glissement afin d'appliquer ainsi le gain du bloc de gain aux signaux d'état de phase afin d'obtenir une sortie de signal de commande (u) ; et

un moyen générateur (103, 113) pour générer le signal de commande de moteur à partir de la sortie du signal de commande ;

**caractérisé par** le fait qu'il comprend en outre :

un moyen d'intégration (101) pour intégrer le paramètre σ afin d'obtenir une valeur de paramètre lissée pour une utilisation dans la commande du bloc de gain de commutation et un multiplieur (113) pour multiplier le signal de commande par le niveau de la valeur de paramètre lissée afin d'atténuer ainsi les composantes à haute fréquence dans le signal de commande de moteur.

2. Appareil selon la revendication 1, dans lequel le moyen d'intégration (101) a pour fonction d'intégrer un signe de ladite variable de plan de phase (sgn(σi)).

3. Appareil selon la revendication 2, comprenant un moyen à fonction de valeur absolue (111) ayant pour fonction de former la valeur absolue de la sortie du moyen d'intégration et de fournir en entrée ladite valeur absolue audit multiplieur.

4. Appareil selon la revendication 3, dans lequel l'un des signaux d'état de phase est un signal de vitesse d'erreur de position d'actionneur (∼X2) généré par différentiation du signal d'erreur de position d'actionneur.

5. Appareil selon l'une quelconque des revendications précédentes, comprenant en outre :

(a) une seconde entrée connectée pour recevoir un signal d'erreur de vitesse d'actionneur (Xv) ;
(b) un second bloc de gain de commutation (104) ayant pour fonction de multiplier sélectivement un second signal d'état de phase (132, ∼X2), proportionnel au signal d'erreur de vitesse d'actionneur, par un troisième gain (γi) ou par un quatrième gain (ζi) en fonction d'une valeur d'une seconde variable de plan de phase représentative de l'état du second signal d'état de phase et d'une seconde trajectoire de plan de phase en conformité avec une seconde relation prédéterminée pour générer un second signal d'état de phase proportionnel ;
(c) une troisième entrée connectée pour recevoir un signal d'accélération d'actionneur Xα; et
(d) un troisième bloc de gain de commutation ayant pour fonction de multiplier sélectivement un troisième signal d'état de phase, proportionnel au signal d'accélération d'actionneur Xα, par un cinquième gain (σi) ou par un sixième gain (θi) en fonction d'une valeur d'une troisième variable de plan de phase représentative de l'état du troisième signal d'état de phase et de la seconde trajectoire de plan de phase en conformité avec une troisième relation prédéterminée pour générer un troisième signal d'état de phase proportionnel (ψ4) auquel sont ajoutés le premier signal d'état de phase proportionnel et le second signal d'état de phase proportionnel pour générer le signal de commande de moteur.

6. Appareil selon la revendication 1, comprenant en outre un intégrateur (116) ayant pour fonction d'intégrer le signal d'erreur de position d'actionneur X1 pour générer un signal intégré (ψ3) ajouté au premier signal d'état de phase proportionnel pour générer le signal de commande calculé.

7. Appareil selon la revendication 2, dans lequel le bloc de commutation de gain (106) est commuté en fonction du signe de la sortie du moyen d'intégration (101).

8. Appareil selon l'une quelconque des revendications précédentes, comprenant un système de stockage à lecteur de disque magnétique comprenant ledit actionneur (8) et ledit moteur (10) commandé par ledit signal de commande de moteur.

9. Procédé de commande destiné à être utilisé dans au moins l'une d'une lecture et d'une écriture de données enregistrées sur un support de stockage de données (4) au moyen d'une tête de lecture/écriture dont la position par rapport au support est réglable par un actionneur (8) actionné par un moteur (10),
le procédé comprenant :

la mise en fonctionnement d'un dispositif de commande de mode de glissement (26) pour fournir en sortie un signal de commande de moteur (U) pour une utilisation dans la commande dudit moteur, le fonctionnement dudit dispositif de commande comprenant les étapes qui consistent à :

fournir en entrée un signal d'erreur de position d'actionneur (X1) représentatif d'une différence entre une position d'actionneur estimée et une position d'actionneur souhaitée ;

générer à partir du signal d'erreur de position d'actionneur des signaux d'état de phase ($\sim$X1, $\sim$X2) définissant une trajectoire dans un espace des états ;

calculer un paramètre $\sigma$ à partir des signaux d'état de phase en conformité avec une relation prédéterminée ($\sigma$1, $\sigma$2, $\sigma$3, $\sigma$4) définissant une ligne de glissement dans l'espace des états ;

utiliser la valeur du paramètre $\sigma$ pour commander un bloc de gain de commutation (106) de telle façon que le gain soit commuté entre des premier et second gains ($\alpha$, $\beta$) lorsque la trajectoire franchit la ligne de glissement ;

appliquer le gain du bloc de gain aux signaux d'état de phase afin d'obtenir une sortie de signal de commande (u) ; et

générer le signal de commande de moteur à partir de la sortie du signal de commande ;

**caractérisé par** le fait qu'il consiste à :

intégrer le paramètre $\sigma$ afin d'obtenir une valeur de paramètre lissée pour une utilisation dans la commande du bloc de gain de commutation et multiplier le signal de commande par le niveau de la valeur de paramètre lissée afin d'atténuer ainsi les composantes à haute fréquence dans le signal de commande de moteur.

10. Procédé selon la revendication 9, dans lequel l'étape d'intégration consiste à intégrer un signe de ladite variable de plan de phase (sgn($\sigma$i)).

11. Procédé selon la revendication 10, comprenant l'étape consistant à former la valeur absolue de la sortie de l'étape d'intégration et à utiliser ladite valeur absolue dans ladite étape de multiplication en tant que valeur de paramètre lissée.

12. Procédé selon l'une quelconque des revendications précédentes, dans lequel l'un des signaux d'état de phase est un signal de vitesse d'erreur de position d'actionneur ($\sim$X2) et comprenant l'étape consistant à générer le signal de vitesse d'erreur en différentiant le signal d'erreur de position d'actionneur (X1).

13. Procédé selon les revendications 9-11, comprenant en outre les étapes qui consistent à :

(a) fournir en entrée un signal d'erreur de vitesse d'actionneur (Xv) ;

(b) faire fonctionner un second bloc de gain de commutation (104) pour multiplier sélectivement un second signal d'état de phase (132, $\sim$X2), proportionnel au signal d'erreur de vitesse d'actionneur, par un troisième gain ($\gamma$i) ou par un quatrième gain ($\zeta$i) en fonction d'une valeur d'une seconde variable de plan de phase représentative de l'état du second signal d'état de phase par rapport à une seconde trajectoire de plan de phase en conformité avec une seconde relation prédéterminée pour générer un second signal d'état de phase proportionnel ;

(c) fournir en entrée un signal d'accélération d'actionneur X$\alpha$; et

(d) faire fonctionner un troisième bloc de gain de commutation pour multiplier sélectivement un troisième signal d'état de phase, proportionnel au signal d'accélération d'actionneur X$\alpha$, par un cinquième gain ($\sigma$i) ou par un sixième gain ($\theta$i) en fonction d'une valeur d'une troisième variable de plan de phase représentative de l'état du troisième signal d'état de phase par rapport à la seconde trajectoire de plan de phase en conformité avec une troisième relation prédéterminée pour générer un troisième signal d'état de phase proportionnel ($\psi$4) auquel sont ajoutés le premier signal d'état de phase proportionnel et le second signal d'état de phase proportionnel pour générer le signal de commande de moteur.

14. Procédé selon la revendication 9, comprenant en outre l'étape consistant à intégrer le signal d'erreur de position d'actionneur X1 pour générer un signal intégré ($\psi_3$) ajouté au premier signal d'état de phase proportionnel pour générer le signal de commande de moteur.

15. Procédé selon la revendication 10, comprenant l'étape consistant à commuter le bloc de commutation de gain (106) en fonction du signe de la sortie du moyen d'intégration (101).

16. Procédé selon l'une quelconque des revendications 9 à 15, dans lequel les gains du bloc de gain de commutation sont programmables.

**17.** Procédé selon l'une quelconque des revendications 9 à 15, consistant à commander un système de stockage à lecteur de disque magnétique comprenant ledit actionneur (8) et ledit moteur (10) commandé par ledit signal de commande de moteur.

FIG. 1

EP 0 845 140 B1

*4*

*38*

*36*

*32*

*34*

## FIG. 2A

*38*

*40* | TRACK NO. | SERVO BURST | *42*

## FIG. 2B

FIG. 3A

EP 0 845 140 B1

FIG. 3B

FIG. 3C

$X_2 = -C \cdot X_1$

$X_2 = -\sqrt{K} \cdot X_1$

FIG. 3D

FIG. 3E

FIG. 4

FIG. 5

FIG. 6

SLIDING MODE CONTROLLER

EP 0 845 140 B1

## FIG. 7A

TRACKING ($\sigma = \sigma4$)

$\alpha i = \alpha4$; $\beta i = \beta4$; $\gamma i = \gamma4$; $\zeta i = \zeta4$;
$\psi3 = Ki \int dt$;
$\sim X1 = X1$;                    202

$\sigma4 = X2 + C3 \cdot X1$;

$\sigma i = \sigma4$;

if ($\sigma i \cdot \sim X1 > 0$)

  $\psi1 = \alpha i \cdot \sim X1$;  else  $\psi1 = \beta i \cdot \sim X1$;

if ($\sigma i \cdot X2 > 0$)

  $\psi2 = \gamma i \cdot \sim X2$;  else  $\psi2 = \zeta i \cdot \sim X2$;

$U = \psi1 + \psi2 + \psi3$;                    204

206
SEEK
?

NO

YES                    200

TO: SEEK ACCELERATE

36

**FIG. 7B**

SEEK ACCELERATE ($\sigma = \sigma1$)

$\alpha i = \alpha 1$; $\beta i = \beta 1$; $\gamma i = \gamma 1$; $\zeta i = \zeta 1$;
$\sim X1 = 0$;
$\sim X2 = X2\text{Ref}$;
$\psi 3 = C$;                    210

$\sigma 1 = C1 \cdot X2^2 + X1 - X1_I$;
$\sigma i = \sigma 1$;
if ($\sigma i \cdot X2 > 0$)
   $\psi 2 = \gamma i \cdot \sim X2$; else $\psi 2 = \zeta i \cdot \sim X2$;
$U = \psi 2 + \psi 3$;                    212

214
$X2 \leq X2\text{Ref}$
?
NO
YES

$\sim X2 = X2$;                    216

$\sigma 1 = C1 \cdot X2^2 + X1 - X1_I$;
$\sigma 2 = X2 - X2_I$;
$\sigma 3 = -C2 \cdot X2^2 + X1$;
$\sigma i = \sigma 1$;
if ($\sigma i \cdot X2 > 0$)
   $\psi 2 = \gamma i \cdot \sim X2$; else $\psi 2 = \zeta i \cdot \sim X2$;
$U = \psi 2 + \psi 3$;                    218

220
$\sigma 1 \leq \sigma 3$
?
YES → TO: SEEK DECELERATE
NO

222
$\sigma 1 \leq \sigma 2$
?
NO
YES                    208

TO: SEEK CONSTANT VELOCITY

37

**SEEK CONSTANT VELOCITY ($\sigma = \sigma 2$)**

$$\alpha i = \alpha 2; \quad \beta i = \beta 2; \quad \gamma i = \gamma 2; \quad \zeta i = \zeta 2;$$

*228*

$$\sigma 2 = X2 - X2\text{I};$$
$$\sigma 3 = -C2 \cdot X2^2 + X1;$$
$$\sigma i = \sigma 2; \text{if } (\sigma i \cdot X2 > 0)$$
$$\psi 2 = \gamma i \cdot {\sim}X2; \quad \text{else} \quad \psi 2 = \zeta i \cdot {\sim}X2;$$
$$U = \psi 2 + \psi 3;$$

*230*

*232*

NO ← $\sigma 2 \leq \sigma 3$ ?

YES

*226*

## FIG. 7C

**SEEK DECELERATE ($\sigma = \sigma 3$)**

$$\alpha i = \alpha 3; \quad \beta i = \beta 3; \quad \gamma i = \gamma 3; \quad \zeta i = \zeta 3;$$

*236*

$$\sigma 3 = -C2 \cdot X2^2 + X1;$$
$$\sigma 4 = X2 + C3 \cdot X1;$$
$$\sigma i = \sigma 3; \text{if } (\sigma i \cdot X2 > 0)$$
$$\psi 2 = \gamma i \cdot {\sim}X2; \quad \text{else} \quad \psi 2 = \zeta i \cdot {\sim}X2;$$
$$U = \psi 2 + \psi 3;$$

*238*

*240*

NO ← $\sigma 4 \leq \sigma 3$ ?

YES

*234*

↓ TO: *TRACKING*

38

FIG. 8

SLIDING MODE CONTROLLER

EP 0 845 140 B1

FIG. 9

FIG. 10

SLIDING MODE CONTROLLER

FIG. 11